# EUROPEAN PATENT SPECIFICATION

(11) **EP 4 131 818 B1**
(45) Date of publication and mention of the grant of the patent: **06.05.2026**
(21) Application number: 21776366.3
(22) Date of filing: 26.03.2021
(51) Int. Cl.: H04L 1/18, H04L 5/00, H04W 72/12, H04L 1/1829

(54) **HARQ-ACK TRANSMISSION METHOD, USER EQUIPMENT AND STORAGE MEDIUM, AND HARQ-ACK RECEPTION METHOD AND BASE STATION**
HARQ-ACK-ÜBERTRAGUNGSVERFAHREN, BENUTZERGERÄT UND SPEICHERMEDIUM SOWIE HARQ-ACK-EMPFANGSVERFAHREN UND BASISSTATION
PROCÉDÉ DE TRANSMISSION DE HARQ-ACK, ÉQUIPEMENT UTILISATEUR ET SUPPORT DE STOCKAGE, ET PROCÉDÉ DE RÉCEPTION DE HARQ-ACK ET STATION DE BASE

(30) Priority: 26.03.2020 KR 20200037108
(43) Date of publication of application: 08.02.2023
(73) Proprietor: LG Electronics, Inc., Yeongdeungpo-gu Seoul 07336 (KR)
(72) Inventor: BAE, Duckhyun, Seoul 06772 (KR); LEE, Hyunho, Seoul 06772 (KR); YANG, Suckchel, Seoul 06772 (KR)
(74) Representative: Plasseraud IP
(86) International application number: PCT/KR2021/003774
(87) International publication number: WO 2021/194301

(56) References cited:
- VIVO: "Other issues for URLLC and UE features", vol. RAN WG1, no. Reno, USA; 20191118 - 20191122, 9 November 2019 (2019-11-09), XP051823169, Retrieved from the Internet <URL:https://ftp.3gpp.org/tsg_ran/WG1_RL1/TSGR1_99/Docs/R1-1912037.zip R1-1912037 Other issues for URLLC and UE features.docx> [retrieved on 20191109]
- CMCC: "Discussion on DL SPS enhancements", vol. RAN WG1, no. Reno, USA; 20191118 - 20191122, 9 November 2019 (2019-11-09), XP051823475, Retrieved from the Internet <URL:https://ftp.3gpp.org/tsg_ran/WG1_RL1/TSGR1_99/Docs/R1-1912541.zip R1-1912541.docx> [retrieved on 20191109]
- LG ELECTRONICS: "Summary#2 of 7.2.6.7 Others", vol. RAN WG1, no. Reno, USA; 20191118 - 20191122, 25 November 2019 (2019-11-25), XP051830730, Retrieved from the Internet <URL:https://ftp.3gpp.org/tsg_ran/WG1_RL1/TSGR1_99/Docs/R1-1913451.zip R1-1913451 Summary#2 of 7.2.6.7 others v3.doc> [retrieved on 20191125]
- SAMSUNG: "Discussion on DL SPS", 3GPP DRAFT; R1-1906961, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, 17 May 2019 (2019-05-17), Mobile Competence Centre ; 650, route des Lucioles ; F-06921 Sophia-Antipolis Cedex ; France, pages 1 - 5, XP051708996
- HUAWEI, HISILICON: "Review Summary for Al 7.1.3.2 related to long PUCCH", 3GPP DRAFT; R1-1811970 REVIEW SUMMARY FOR AL 7.1.3.2 LONG PUCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chengdu, China; 20180908 - 20180912, 10 October 2018 (2018-10-10), Mobile Competence Centre ; 650, route des Lucioles ; F-06921 Sophia-Antipolis Cedex ; France, XP051519295
- NTT DOCOMO, INC.: "PUCCH resource determination for HARQ-ACK for SPS PDSCH", 3GPP DRAFT; R1-2000924, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200224 - 20200306, 14 February 2020 (2020-02-14), Mobile Competence Centre ; 650, route des Lucioles ; F-06921 Sophia-Antipolis Cedex ; France, XP051853102
- CATT: "Remaining issues on DL SPS enhancement", 3GPP DRAFT; R1-2000533, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-meeting; 20200224 - 20200306, 15 February 2020 (2020-02-15), Mobile Competence Centre ; 650, route des Lucioles ; F-06921 Sophia-Antipolis Cedex ; France, XP051853357
- ERICSSON: "DL SPS configuration and HARQ aspects", 3GPP DRAFT; R2-1909366 DL SPS CONFIGURATION AND HARQ ASPECTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20190826 - 20190830, 15 August 2019 (2019-08-15), Mobile Competence Centre ; 650, route des Lucioles ; F-06921 Sophia-Antipolis Cedex ; France, XP051767166

## Description

### TECHNICAL FIELD

The present disclosure relates to a wireless communication system.

### BACKGROUND ART

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like. Document: VIVO: "Other issues for URLLC and UE features", 3GPP DRAFT; R1-1912037, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, vol. RAN WG1, no. Reno, USA; 20191118 - 20191122 9 November 2019 (2019-11-09), XP051823169,

Retrieved from the Internet:
URL:https://ftp.3gpp.oreg/tsg_ ran/WG1_RL1/TSGR1_99/Docs/ R1-1912037.zip R1-1912037 Other issues for URLLC and UE features.docx, relates to URLLC in 3GPP.

### DISCLOSURE

### Technical Problem

As new radio communication technology has been introduced, the number of UEs to which a BS should provide services in a prescribed resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

A method to efficiently support various services with different requirements in a wireless communication system is also needed.

Overcoming delay or latency is an important challenge to applications, performance of which is sensitive to delay/latency.

The objects to be achieved with the present disclosure are not limited to what has been particularly described hereinabove and other objects not described herein will be more clearly understood by persons skilled in the art from the following detailed description.

### Technical Solution

According to an aspect of the present disclosure, provided herein is a method according to claim 1.

In another aspect of the present disclosure, provided herein is a user equipment (UE) according to claim 7.

In another aspect of the present disclosure, provided herein is a computer readable storage medium according to claim 8.

In another aspect of the present disclosure, provided herein is a method according to claim 9.

In another aspect of the present disclosure, provided herein is a base station (BS) according to claim 15.

### Advantageous Effects

According to implementation(s) of the present disclosure, a wireless communication signal may be efficiently transmitted/received. Accordingly, the total throughput of a wireless communication system may be raised.

According to implementation(s) of the present disclosure, various services with different requirements may be efficiently supported in a wireless communication system.

According to implementation(s) of the present disclosure, delay/latency generated during radio communication between communication devices may be reduced.

The effects according to the present disclosure are not limited to what has been particularly described hereinabove and other effects not described herein will be more clearly understood by persons skilled in the art related to the present disclosure from the following detailed description.

### Description of Drawings

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates slot structures used in a 3GPP-based system;

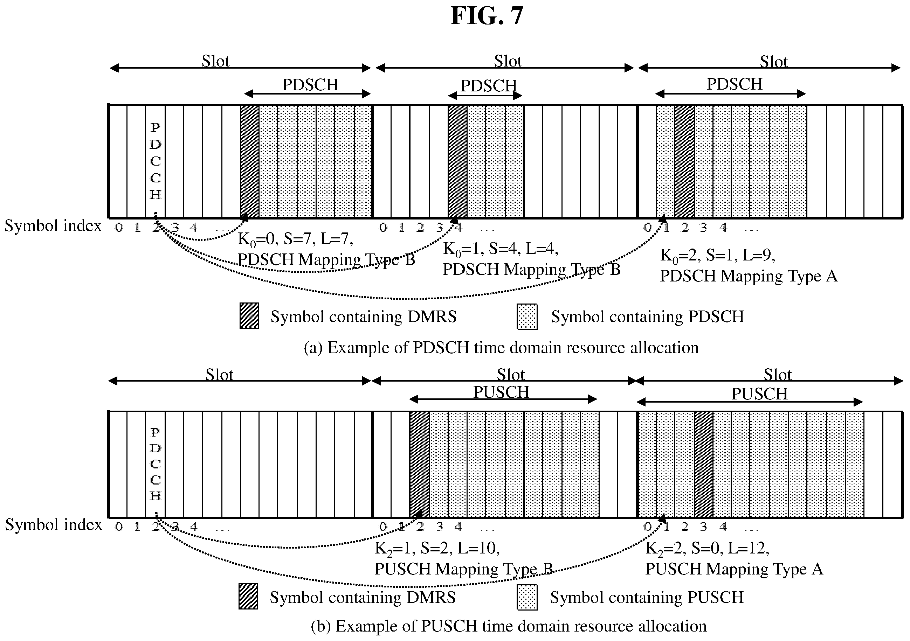

FIG. 7 illustrates an example of PDSCH time domain resource allocation (TDRA) caused by a PDCCH and an example of PUSCH TDRA caused by the PDCCH;
FIG. 8 illustrates a hybrid automatic repeat request-acknowledgement (HARQ-ACK) transmission/reception procedure;
FIG. 9 illustrates an example of a process for a UE with overlapping PUCCHs in a single slot to handle collision between UL channels;
FIG. 10 illustrates cases for performing UCI multiplexing based on FIG. 9;
FIG. 11 illustrates UCI multiplexing considering a timeline condition;
FIG. 12 illustrates a HARQ-ACK transmission flow according to some implementations of the present disclosure;
FIG. 13 illustrates a HARQ-ACK transmission flow according to some implementations of the present disclosure;
FIG. 14 illustrates a signal transmission/reception flow between a UE and a BS according to some implementations of the present disclosure.

### MODE FOR INVENTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

For dual connectivity (DC) operation, the term SpCell refers to the Pcell of a master cell group (MCG) or the Pcell of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes a PSCell and 0 or more Scells. For a UE in RRC_CONNECTED state, not configured with CA or DC, only one serving cell including only the Pcell is present. For a UE in RRC_CONNECTED state, configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

A UE with which CA is configured and DC is not configured may be configured with a Pcell PUCCH group, which includes the Pcell and 0 or more Scells, and an Scell PUCCH group, which includes only Scell(s). For the Scells, an Scell on which a PUCCH associated with the corresponding cell is transmitted (hereinafter, PUCCH cell) may be configured. An Scell indicated as the PUCCH Scell belongs to the Scell PUCCH group and PUCCH transmission of related UCI is performed on the PUCCH Scell. An Scell, which is not indicated as the PUCCH Scell or in which a cell indicated for PUCCH transmission is a Pcell, belongs to the Pcell PUCCH group and PUCCH transmission of related UCI is performed on the Pcell.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, the PDCCH refers to a set of time-frequency resource elements (REs) that carry downlink control information (DCI), and the PDSCH refers to a set of REs that carry DL data. The PUCCH, PUSCH, and PRACH refer to a set of time-frequency REs that carry uplink control information (UCI), UL data, and random access signals, respectively. In the following description, the meaning of "The UE transmits/receives the PUCCH/PUSCH/PRACH" is that the UE transmits/receives the UCI /UL data/random access signals on or through the PUCCH/PUSCH/PRACH, respectively. In addition, the meaning of "the BS transmits/receives the PBCH/PDCCH/PDSCH" is that the BS transmits the broadcast information/DCI/DL data on or through a PBCH/PDCCH/PDSCH, respectively.

In the present disclosure, a radio resource (e.g., a time-frequency resource) scheduled or configured for the UE by the BS for transmission or reception of PUCCH/PUSCH/PDSCH is also referred to as a PUCCH/PUSCH/PDSCH resource.

As more and more communication devices have required greater communication capacity, there has been a need for eMBB communication relative to legacy radio access technology (RAT). In addition, massive MTC for providing various services at any time and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

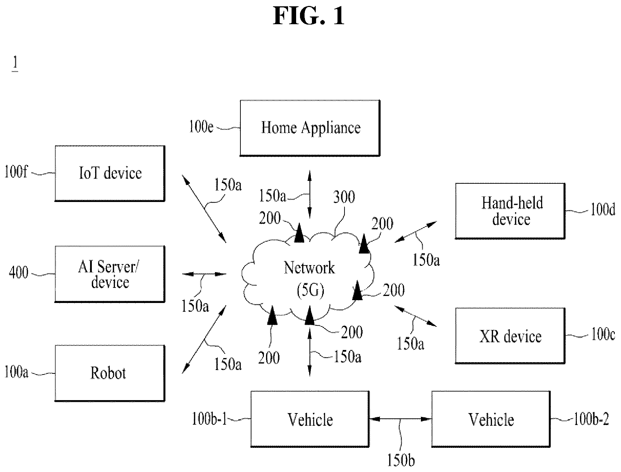

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

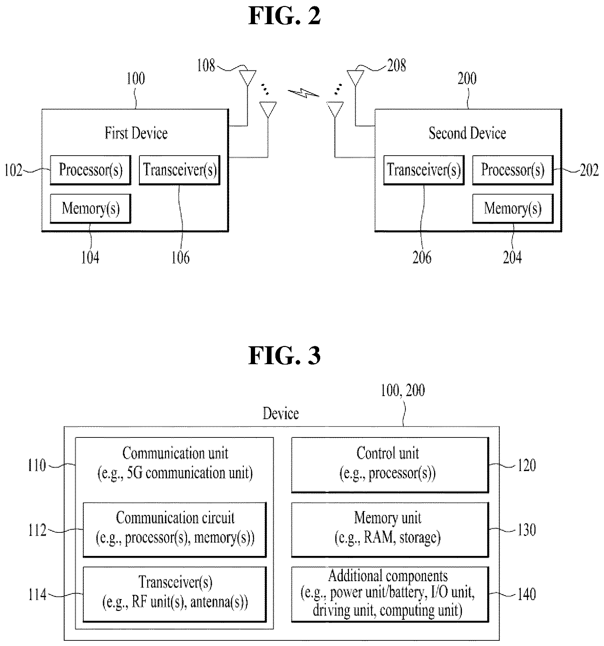

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the afore/below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the afore/below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of Things for low-power communication as well as LTE, NR, and 6G communications. For example, NB-IoT technology may be an example of Low Power Wide Area Network (LPWAN) technology, and may be implemented by, but is limited to, standards such as LTE Cat NB1 and/or LTE Cat NB2. Additionally or alternatively, the wireless communication technology implemented in the wireless devices XXX and YYY of the present disclosure may perform communication based on the LTE-M technology. For example, the LTE-M technology may be an example of the LPWAN technology, and may be called by various names such as enhanced machine type communication (eMTC). For example, the LTE-M technology may be implemented by, but is not limited to, at least one of various standards such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M. Additionally or alternatively, the wireless communication technology implemented in the wireless devices XXX and YYY of the present disclosure may include, but is not limited to, at least one of ZigBee, Bluetooth, and Low Power Wide Area Network (LPWAN) considering low-power communication. For example, the ZigBee technology may create personal area networks (PAN) related to small/low-power digital communications based on various standards such as IEEE 802.15.4, and may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in this document. The one or more processors 102 and 202 may generate messages, control information, data, or information according to the functions, procedures, proposals, and/or methods disclosed in this document. The one or more processors 102 and 202 may generate signals (e.g., baseband signals) including PDUs, SDUs, messages, control information, data, or information according to the functions, procedures, proposals, and/or methods disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in this document may be implemented using firmware or software, and the firmware or software may be configured to include the modules, procedures, or functions. Firmware or software configured to perform the functions, procedures, proposals, and/or methods disclosed in this document may be included in the one or more processors 102 and 202 or stored in the one or more memories 104 and 204 so as to be driven by the one or more processors 102 and 202. The functions, procedures, proposals, and/or methods disclosed in this document may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-volatile memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

A communication device of the present disclosure includes at least one processor; and at least one computer memory operably connected to the at least one processor and configured to store instructions for causing, when executed, the at least one processor to perform operations according to example(s) of the present disclosure described later.

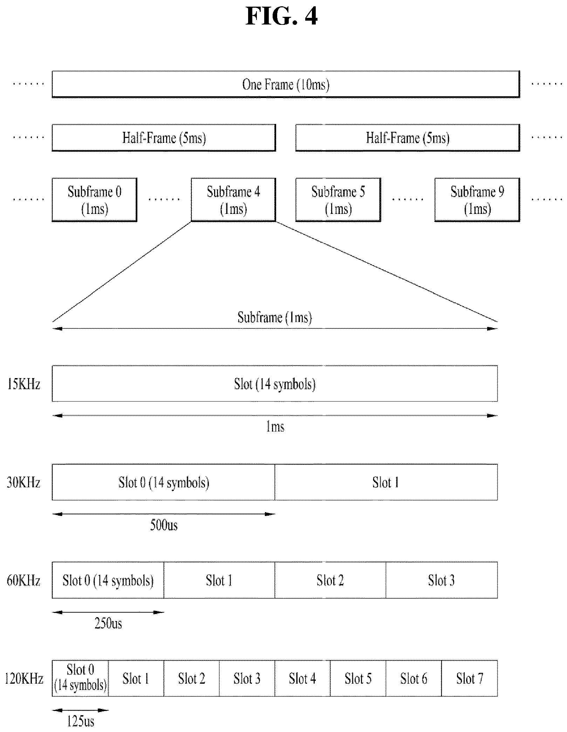

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f}= 4096. For reference, a basic time unit for LTE is Tₛ = 1/(△f_{ref}*N_{f,ref}) where Δf_{ref} = 15*10³ Hz and N_{f,ref} = 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{*f*rame,u}ₛₗₒₜ) per frame, and the number of slots (*N*^{subtrame,u}ₛₗₒₜ) per subframe.

**Table 1**

| *u* | *N*^{slot}_{symb} | *N*^{frame,u}ₛₗₒₜ | *N*^{subtrame,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| *u* | *N*^{slot}_{symb} | *N*^{frame,u}ₛₗₒₜ | *N*^{subtrame,u}ₛₗₒₜ |
|---|---|---|---|
| 2 | 12 | 40 | 4 |

For the search space configuration u, slots are numbered as n^{u}ₛ ∈ {0,..., n^{subframe,u}ₛₗₒₜ - 1} in ascending order within a subframe and as n^{u}_{s,f} ∈ {0,..., n^{frame,u}ₛₗₒₜ - 1} in ascending order within a frame.

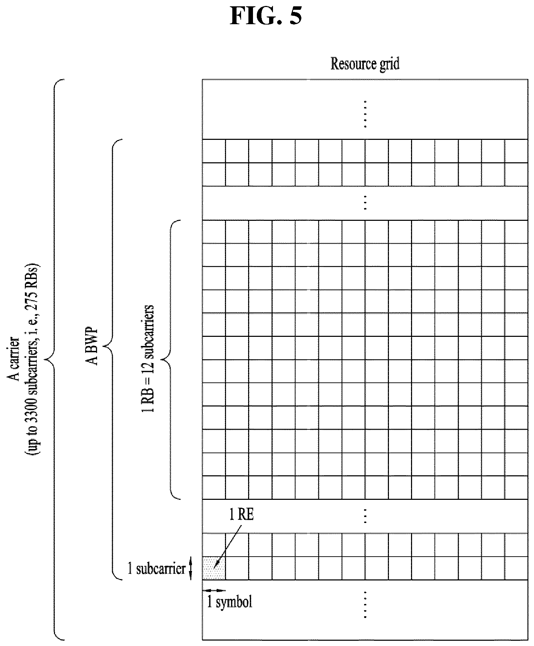

FIG. 5 illustrates a resource grid of a slot. The slot includes multiple (e.g., 14 or 12) symbols in the time domain. For each numerology (e.g., subcarrier spacing) and carrier, a resource grid of *N*^{size,u} _{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration *u* is given to the UE by a higher layer parameter (e.g. RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u*. The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP is a subset of contiguous CRBs defined for given numerology uᵢ in BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in the set of DL BWPs or UL BWPs, the network configures at least an initial DL BWP and one (when the serving cell is configured with uplink) or two (when supplementary uplink is used) initial UL BWPs. The network may configure additional UL and DL BWPs for the serving cell. For each DL BWP or UL BWP, the UE is provided with the following parameters for the serving cell: *O*_{carrier} provided by an RRC parameter *offsetToCarrier* for CRB *N*^{start}_{BWP} = *O*_{carrier} + *RB*ₛₜₐᵣₜ, the number of contiguous RBs *N*^{size}_{BWP} = *L*_{RB}, and subcarrier spacing, provided by an RRC parameter *locationAndBandwidth* indicating offset RBₛₑₜ and length L_{RB} as resource indicator values (RIVs) based on i) subcarrier spacing; ii) cyclic prefix; iii) the assumption that *N*^{start}_{BWP} = 275; an index in the set of the DL BWPs or UL BWPs; a set of BWP-common parameters and a set of BWP-only parameters.

Virtual resource blocks (VRBs) are defined in a BWP and are numbered from 0 to *N*^{size,u}_{BWP,i}-1, where i is the number of the BWP. The VRBs are mapped to physical resource blocks (PRBs) according to non-interleaved mapping. In some implementations, in non-interleaved VRB-to-PRB mapping, VRB n may be mapped to PRB n.

The UE for which carrier aggregation is configured may be configured to use one or more cells. If the UE is configured with a plurality of serving cells, the UE may be configured with one or multiple cell groups. The UE may also be configured with a plurality of cell groups associated with different BSs. Alternatively, the UE may be configured with a plurality of cell groups associated with a single BS. Each cell group of the UE includes one or more serving cells and includes a single PUCCH cell for which PUCCH resources are configured. The PUCCH cell may be a Pcell or an Scell configured as the PUCCH cell among Scells of a corresponding cell group. Each serving cell of the UE belongs to one of cell groups of the UE and does not belong to a plurality of cells.

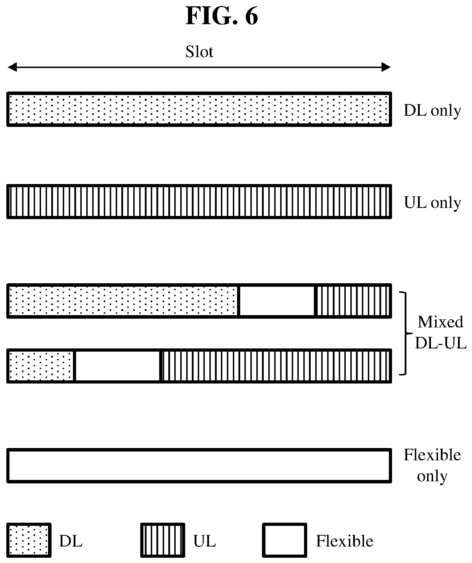

FIG. 6 illustrates slot structures used in a 3GPP-based system. In all 3GPP-based systems, for example, in an NR system, each slot may have a self-contained structure including i) a DL control channel, ii) DL or UL data, and/or iii) a UL control channel. For example, the first N symbols in a slot may be used to transmit the DL control channel (hereinafter, DL control region) and the last M symbols in a slot may be used to transmit the UL control channel (hereinafter, UL control region), where N and M are integers other than negative numbers. A resource region (hereinafter, data region) between the DL control region and the UL control region may be used to transmit DL data or UL data. Symbols in a single slot may be divided into group(s) of consecutive symbols that may be used as DL symbols, UL symbols, or flexible symbols. Hereinbelow, information indicating how each symbol in slot(s) is used will be referred to as a slot format. For example, which symbols in slot(s) are used for UL and which symbols in slot(s) are used for DL may be defined by a slot format.

When a BS intends to operate a serving cell in time division duplex (TDD) mode, the BS may configure a pattern for UL and DL allocation for the serving cell through higher layer (e.g., RRC) signaling. For example, the following parameters may be used to configure a TDD DL-UL pattern:
- *dl-UL-TransmissionPeriodicity* that provides a periodicity of the DL-UL pattern;
- *nrofDownlinkSlots* that provides the number of consecutive full DL slots at the beginning of each DL-UL pattern, where the full DL slots are slots having only DL symbols;
- *nrofDownlinkSymbols* that provides the number of consecutive DL symbols at the beginning of a slot immediately following the last full DL slot;
- *nrofUplinkSlots* that provides the number of consecutive full UL slots at the end of each DL-UL pattern, where the full UL slots are slots having only UL symbols; and
- *nrofUplinkSymbols* that provides the number of consecutive UL symbols in the end of a slot immediately preceding the first full UL slot.

The remaining symbols that are not configured as either DL symbols or UL symbols among symbols in the DL-UL pattern are flexible symbols.

If the UE is provided with a configuration for the TDD DL-UL pattern, i.e., a TDD UL-DL configuration (e.g., *tdd-UL-DL-ConfigurationCommon,* or *tdd-UL-DLConfigurationDedicated*), through higher layer signaling, the UE sets a slot format per slot over a number of slots based on the configuration.

For symbols, although there may be various combinations of DL symbols, UL symbols, and flexible symbols, a predetermined number of combinations may be predefined as slot formats and the predefined slot formats may be respectively identified by slot format indexes. The following table shows a part of the predefined slot formats. In the table below, D denotes a DL symbol, U denotes a UL symbol, and F denotes a flexible symbol.

**Table 3**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| **0** | **D** | **D** | **D** | **D** | **D** | **D** | **D** | **D** | **D** | **D** | **D** | **D** | **D** | **D** |
| **1** | **U** | **U** | **U** | **U** | **U** | **U** | **U** | **U** | **U** | **U** | **U** | **U** | **U** | **U** |
| **2** | **F** | **F** | **F** | **F** | **F** | **F** | **F** | **F** | **F** | **F** | **F** | **F** | **F** | **F** |
| **3** | **D** | **D** | **D** | **D** | **D** | **D** | **D** | **D** | **D** | **D** | **D** | **D** | **D** | **F** |
| **4** | **D** | **D** | **D** | **D** | **D** | **D** | **D** | **D** | **D** | **D** | **D** | **D** | **F** | **F** |
| **5** | **D** | **D** | **D** | **D** | **D** | **D** | **D** | **D** | **D** | **D** | **D** | **F** | **F** | **F** |
| **6** | **D** | **D** | **D** | **D** | **D** | **D** | **D** | **D** | **D** | **D** | **F** | **F** | **F** | **F** |
| **7** | **D** | **D** | **D** | **D** | **D** | **D** | **D** | **D** | **D** | **F** | **F** | **F** | **F** | **F** |
| **8** | **F** | **F** | **F** | **F** | **F** | **F** | **F** | **F** | **F** | **F** | **F** | **F** | **F** | **U** |
| **9** | **F** | **F** | **F** | **F** | **F** | **F** | **F** | **F** | **F** | **F** | **F** | **F** | **U** | **U** |
| **10** | **F** | **U** | **U** | **U** | **U** | **U** | **U** | **U** | **U** | **U** | **U** | **U** | **U** | **U** |
| **11** | **F** | **F** | **U** | **U** | **U** | **U** | **U** | **U** | **U** | **U** | **U** | **U** | **U** | **U** |
| **12** | **F** | **F** | **F** | **U** | **U** | **U** | **U** | **U** | **U** | **U** | **U** | **U** | **U** | **U** |
| **13** | **F** | **F** | **F** | **F** | **U** | **U** | **U** | **U** | **U** | **U** | **U** | **U** | **U** | **U** |
| **14** | **F** | **F** | **F** | **F** | **F** | **U** | **U** | **U** | **U** | **U** | **U** | **U** | **U** | **U** |
| **15** | **F** | **F** | **F** | **F** | **F** | **F** | **U** | **U** | **U** | **U** | **U** | **U** | **U** | **U** |
| **16** | **D** | **F** | **F** | **F** | **F** | **F** | **F** | **F** | **F** | **F** | **F** | **F** | **F** | **F** |
| **17** | **D** | **D** | **F** | **F** | **F** | **F** | **F** | **F** | **F** | **F** | **F** | **F** | **F** | **F** |
| **18** | **D** | **D** | **D** | **F** | **F** | **F** | **F** | **F** | **F** | **F** | **F** | **F** | **F** | **F** |
| **19** | **D** | **F** | **F** | **F** | **F** | **F** | **F** | **F** | **F** | **F** | **F** | **F** | **F** | **U** |
| **20** | **D** | **D** | **F** | **F** | **F** | **F** | **F** | **F** | **F** | **F** | **F** | **F** | **F** | **U** |
| **...** | **...** | | | | | | | | | | | | | |

To indicate which slot format is used in a specific slot among the predefined slot formats, the BS may configure a set of slot format combinations applicable to a corresponding serving cell per cell with respect to a set of serving cells through higher layer (e.g., RRC) signaling and cause the UE to monitor a group-common PDCCH for slot format indicator(s) (SFI(s)) through higher layer (e.g., RRC) signaling. Hereinafter, DCI carried by the group-common PDCCH for the SFI(s) will be referred to as SFI DCI. DCI format 2_0 is used as the SFI DCI. For example, for each serving cell in a set of serving cells, the BS may provide the UE with the (start) position of a slot format combination ID (i.e., SFI-index) for a corresponding serving cell in the SFI DCI, a set of slot format combinations applicable to the serving cell, and a reference subcarrier spacing configuration for each slot format in a slot format combination indicated by an SFI-index value in the SFI DCI. One or more slot formats are configured for each slot format combination in the set of the slot format combinations and the slot format combination ID (i.e., SFI-index) is assigned to the slot format combination. For example, when the BS intends to configure the slot format combination with N slot formats, N slot format indexes among slot format indexes for the predefined slot formats (e.g., see Table 3) may be indicated for the slot format combination. In order to configure the UE to monitor the group-common PDCCH for the SFIs, the BS informs the UE of an SFI-RNTI corresponding to a radio network temporary identifier (RNTI) used for an SFI and the total length of a DCI payload scrambled with the SFI-RNTI. Upon detecting the PDCCH based on the SFI-RNTI, the UE may determine slot format(s) for the corresponding serving cell from an SFI-index for the serving cell among SFI-indexes in the DCI payload in the PDCCH.

Symbols indicated as flexible symbols by the TDD DL-UL pattern configuration may be indicated as UL symbols, DL symbols, or flexible symbols by the SFI DCI. Symbols indicated as the DL/UL symbols by the TDD DL-UL pattern configuration are not overridden as the UL/DL symbols or the flexible symbols by the SFI DCI.

If the TDD DL-UL pattern is not configured, the UE determines whether each slot is used for UL or DL and determines symbol allocation in each slot based on the SFI DCI and/or on DCI for scheduling or triggering DL or UL signal transmission (e.g., DCI format 1_0, DCI format 1_1, DCI format 1_2, DCI format 0_0, DCI format 0_1, DCI format 0_2, or DCI format 2_3).

NR frequency bands are defined as two types of frequency ranges, i.e., FR1 and FR2. FR2 is also referred to as millimeter wave (mmW). The following table shows frequency ranges within which NR may operate.

**Table 4**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including information about resource allocation of the DL-SCH is referred to as PDSCH scheduling DCI, and DCI including information about resource allocation of the UL-SCH is referred to as PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH means a physical layer UL channel for UCI transmission. The PUCCH carries UCI. The UCI includes the following information.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CSI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.

In the present disclosure, for convenience, PUCCH resources configured/indicated for/to the UE by the BS for HARQ-ACK, SR, and CSI transmission are referred to as a HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 5.
(0) PUCCH format 0 (PF0 or F0)
   - Supported UCI payload size: up to K bits (e.g., K=2)
   - Number of OFDM symbols constituting a single PUCCH: 1 to X symbols (e.g., X=2)
   - Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
   - Configuration for PUCCH format 0 includes the following parameters for a corresponding PUCCH resource: an index for initial cyclic shift, the number of symbols for PUCCH transmission, and/or the first symbol for PUCCH transmission.
(1) PUCCH format 1 (PF1 or F1)
   - Supported UCI payload size: up to K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
   - Configuration for PUCCH format 1 includes the following parameters for a corresponding PUCCH resource: an index for initial cyclic shift, the number of symbols for PUCCH transmission, the first symbol for PUCCH transmission, and/or an index for the OCC.
(2) PUCCH format 2 (PF2 or F2)
   - Supported UCI payload size: more than K bits (e.g., K=2)
   - Number of OFDM symbols constituting a single PUCCH: 1 to X symbols (e.g., X=2)
   - Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
   - Configuration for PUCCH format 2 includes the following parameters for a corresponding PUCCH resource: the number of PRBs, the number of symbols for PUCCH transmission, and/or the first symbol for PUCCH transmission.
(3) PUCCH format 3 (PF3 or F3)
   - Supported UCI payload size: more than K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).
      Configuration for PUCCH format 3 includes the following parameters for a corresponding PUCCH resource: the number of PRBs, the number of symbols for PUCCH transmission, and/or the first symbol for PUCCH transmission.
(4) PUCCH format 4 (PF4 or F4)
   - Supported UCI payload size: more than K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
   - Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 5**

| PUCCH format | Length in OFDM symbols N^{PUCCH}_{symb} | Number of bits | Usage | Etc. |
|---|---|---|---|---|
| 0 | 1 - 2 | =<2 | HARQ, SR | Sequence selection |
| 1 | 4 - 14 | =<2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM(no UE multiplexing) |
| 4 | 4 - 14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}. - PUCCH resource set #0, if the number of UCI bits =< 2
- PUCCH resource set #1, if 2< the number of UCI bits =< N₁
   **...**
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 5).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

Hereinafter, resource allocation by the PDCCH and resource allocation by RRC will be described in more detail.

### * Resource Allocation by PDCCH: dynamic grant/assignment

The PDCCH may be used to schedule DL transmission on the PDSCH and UL transmission on the PUSCH. DCI on the PDCCH for scheduling DL transmission may include DL resource assignment that at least includes a modulation and coding format (e.g., modulation and coding scheme (MCS)) index *I*_{MCS}), resource allocation, and HARQ information, associated with a DL-SCH. DCI on the PDCCH for scheduling UL transmission may include a UL scheduling grant that at least includes a modulation and coding format, resource allocation, and HARQ information, associated with a UL-SCH. The size and usage of the DCI carried by one PDCCH differs according to a DCI format. For example, DCI format 0_0, DCI format 0_1, or DCI format 0_2 may be used to schedule the PUSCH, and DCI format 1_0, DCI format 1_1, or DCI format 1_2 may be used to schedule the PDSCH. Particularly, DCI format 0_2 and DCI format 1_2 may be used to schedule transmission having higher transmission reliability and lower latency requirements than transmission reliability and latency requirement guaranteed by DCI format 0_0, DCI format 0_1, DCI format 1_0, or DCI format 1_1. Some implementations of the present disclosure may be applied to UL data transmission based on DCL format 0_2. Some implementations of the present disclosure may be applied to DL data reception based on DCI format 1_2.

FIG. 6 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value *m* for a row index *m*+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator value *SLIV* (or directly, a start position (e.g., start symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., start symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol S relative to the start of the slot with the PDSCH or PUSCH and the number of consecutive symbols, *L*, counting from the symbol S. The PDSCH/PUSCH mapping type has two mapping types: mapping type A and mapping type B. In PDSCH/PUSCH mapping type A, a demodulation reference signal (DMRS) is mapped to a PDSCH/PUSCH resource based on the start of a slot. According to other DMRS parameters, one or two symbols among the symbols of the PDSCH/PUSCH resource may be used as DMRS symbol(s). For example, in PDSCH/PUSCH mapping type A, the DMRS is located on the third symbol (symbol #2) or the fourth symbol (symbol #3) in the slot according to RRC signaling. In PDSCH/PUSCH mapping type B, the DMRS is mapped based on the first OFDM symbol of the PDSCH/PUSCH resource. According to other DMRS parameters, one or two symbols from the first symbol of the PDSCH/PUSCH resource may be used as DMRS symbol(s). For example, in PDSCH/PUSCH mapping type B, the DMRS is located on the first symbol allocated for PDSCH/PUSCH. In the present disclosure, the PDSCH/PUSCH mapping type may be referred to as a mapping type or a DMRS mapping type. For example, in the present disclosure, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

### * Resource Allocation by RRC

As mentioned above, there are two types of transmission without dynamic grant: configured grant Type 1 and configured grant Type 2. In configured grant Type 1, a UL grant is provided by RRC and stored as a configured UL grant. In configured grant Type 2, the UL grant is provided by the PDCCH and stored or cleared as the configured UL grant based on L1 signaling indicating configured UL grant activation or deactivation. Type 1 and Type 2 may be configured by RRC per serving cell and per BWP. Multiple configurations may be active simultaneously on different serving cells.

When configured grant Type 1 is configured, the UE may be provided with the following parameters through RRC signaling:
- *cs-RNTI* corresponding to a CS-RNTI for retransmission;
- *periodicity* corresponding to a periodicity of configured grant Type 1;
- *timeDomainOffset* indicating an offset of a resource with respect to system frame number (SFN) = 0 in the time domain;
- *timeDomainAllocation* value *m* that provides a row index *m*+1 pointing to the allocation table, indicating a combination of the start symbol S, the length *L*, and the PUSCH mapping type;
- *frequencyDomainAllocation* that provides frequency domain resource allocation; and
- *mcsAndTBS* that provides *I*_{MCS} indicating a modulation order, a target code rate, and a transport block size.

Upon configuration of configured grant Type 1 for a serving cell by RRC, the UE stores the UL grant provided by RRC as a configured UL grant for an indicated serving cell and initializes or re-initializes the configured UL grant to start in a symbol according to *timeDomainOffset* and *S* (derived from *SLIV*) and to recur with *periodicity.* After the UL grant is configured for configured grant Type 1, the UE may consider that the UL grant recurs in association with each symbol satisfying: [(SFN * *numberOfSlotsPerFrame* (*numberOfSymbolsPerSlot*) + (slot number in the frame ** numberOfSymbolsPerSlot*) *+* symbol number in the slot] = (*timeDomainOffset * numberOfSymbolsPerSlot + S* + N ** periodicity*) modulo (1024 * *numberOfSlotsPerFrame * numberOfSymbolsPerSlot*), for all N >= 0, where *numberOfSlotsPerFrame* and *numberOfSymbolsPerSlot* indicate the number of consecutive slots per frame and the number of consecutive OFDM symbols per slot, respectively (refer to Table 1 and Table 2).

For configured grant Type 2, the UE may be provided with the following parameters by the BS through RRC signaling:
- *cs-RNTI* corresponding to a CS-RNTI for activation, deactivation, and retransmission; and
- *periodicity* that provides a periodicity of configured grant Type 2.

An actual UL grant is provided to the UE by the PDCCH (addressed to the CS-RNTI). After the UL grant is configured for configured grant Type 2, the UE may consider that the UL grant recurs in association with each symbol satisfying: [(SFN * *numberOfSlotsPerFrame * numberOfSymbolsPerSlot*) + (slot number in the frame * *numberOfSymbolsPerSlot*) *+* symbol number in the slot] = [(SFN_{start time} * *numberOfSlotsPerFrame * numberOfSymbolsPerSlot +* slot_{start time} ** numberOfSymbolsPerSlot +* symbol_{start time}) + N ** periodicity*] modulo (1024 * *numberOfSlotsPerFrame * numberOfSymbolsPerSlot*), for all N >= 0, where SFN_{start time}, slot_{start time}, and symbol_{start time} represent an SFN, a slot, and a symbol, respectively, of the first transmission opportunity of the PUSCH after the configured grant is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

On DL, the UE may be configured with semi-persistent scheduling (SPS) per serving cell and per BWP by RRC signaling from the BS. For DL SPS, DL assignment is provided to the UE by the PDCCH and stored or cleared based on L1 signaling indicating SPS activation or deactivation. When SPS is configured, the UE may be provided with the following parameters by the BS through RRC signaling:
- *cs-RNTI* corresponding to a CS-RNTI for activation, deactivation, and retransmission;
- *nrofHARQ-Processes* that provides the number of HARQ processes for SPS;
- *periodicity* that provides a periodicity of configured DL assignment for SPS;
- *n1PUCCH-AN* that provides a HARQ resource for a PUCCH for SPS (a network configures the HARQ resource as format 0 or format 1, and an actual PUCCH resource is configured by *PUCCH-Config* and is referred to in *n1PUCCH-AN* by an ID thereof).

After DL assignment is configured for SPS, the UE may consider sequentially that N-th DL assignment occurs in a slot satisfying: (*numberOfSlotsPerFrame* * SFN + slot number in the frame) = [(*numberOfSlotsPerFrame ** SFN_{start time} + slot_{start time}) + N ** periodicity * numberOfSlotsPerFrame* / *10]* modulo (1024 * *numberOfSlotsPerFrame*), where SFN_{start time} and slot_{start time} represent an SFN and a slot, respectively, of first transmission of the PDSCH after configured DL assignment is (re-)initialized, and *numberOfSlotsPerFrame* and *numberOfSymbolsPerSlot* indicate the number of consecutive slots per frame and consecutive OFDM symbols per slot, respectively (refer to Table 1 and Table 2).

If the CRC of a corresponding DCI format is scrambled with the CS-RNTI provided by the RRC parameter *cs-RNTI,* and a new data indicator field for an enabled transport block is set to 0, the UE validates, for scheduling activation or scheduling release, a DL SPS assignment PDCCH or a configured UL grant Type 2 PDCCH. Validation of the DCI format is achieved if all fields for the DCI format are set according to Table 6 and Table 7. Table 6 shows an example of special fields for DL SPS and UL grant Type 2 scheduling activation PDCCH validation, and Table 7 shows an example of special fields for DL SPS and UL grant Type 2 scheduling release PDCCH validation.

**Table 6**

| | DCI format 0_0/0_1 | DCI format 1_0 | DCI format 1_1 |
|---|---|---|---|
| HARQ process number | set to all '0's | set to all '0's | set to all '0's |
| Redundancy version | set to '00' | set to '00' | For the enabled transport block: set to '00' |

**Table 7**

| | DCI format 0_0 | DCI format 1_0 |
|---|---|---|
| HARQ process number | set to all '0's | set to all '0's |
| Redundancy version | set to '00' | set to '00' |
| Modulation and coding scheme | set to all '1's | set to all '1's |
| Resource block assignment | set to all '1's | set to all '1's |

Actual DL assignment and UL grant for DL SPS or UL grant Type 2, and a corresponding MCS are provided by resource assignment fields (e.g., a TDRA field providing a TDRA value m, an FDRA field providing frequency resource block assignment, and/or an MCS field) in the DCI format carried by a corresponding DL SPS or UL grant Type 2 scheduling activation PDCCH. If validation is achieved, the UE considers information in the DCI format as valid activation or valid release of DL SPS or configured UL grant Type 2.

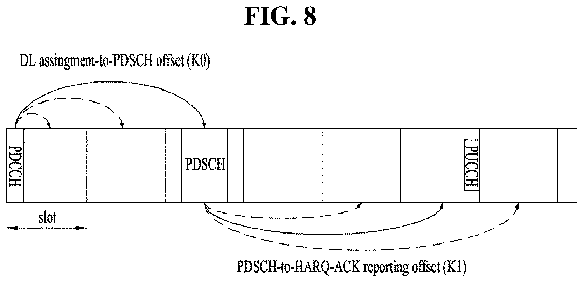

FIG. 8 illustrates a HARQ-ACK transmission/reception procedure.

Referring to FIG. 8, the UE may detect a PDCCH in a slot n. Next, the UE may receive a PDSCH in a slot n+K0 according to scheduling information received through the PDCCH in the slot n and then transmit UCI through a PUCCH in a slot n+K1. In this case, the UCI includes a HARQ-ACK response for the PDSCH.

The DCI (e.g., DCI format 1_0 or DCI format 1_1) carried by the PDCCH for scheduling the PDSCH may include the following information.
- FDRA: FDRA indicates an RB set allocated to the PDSCH.
- TDRA: TDRA indicates a DL assignment-to-PDSCH slot offset K0, the start position (e.g., symbol index S) and length (e.g., the number of symbols, L) of the PDSCH in a slot, and the PDSCH mapping type. PDSCH mapping Type A or PDSCH mapping Type B may be indicated by TDRA. For PDSCH mapping Type A, the DMRS is located in the third symbol (symbol #2) or fourth symbol (symbol #3) in a slot. For PDSCH mapping Type B, the DMRS is allocated in the first symbol allocated for the PDSCH.
- PDSCH-to-HARQ_feedback timing indicator: This indicator indicates K1.

If the PDSCH is configured to transmit a maximum of one TB, a HARQ-ACK response may consist of one bit. If the PDSCH is configured to transmit a maximum of 2 TBs, the HARQ-ACK response may consist of 2 bits when spatial bundling is not configured and one bit when spatial bundling is configured. When a HARQ-ACK transmission timing for a plurality of PDSCHs is designated as slot n+K1, UCI transmitted in slot n+K1 includes a HARQ-ACK response for the plural PDSCHs.

In the present disclosure, a HARQ-ACK payload consisting of HARQ-ACK bit(s) for one or plural PDSCHs may be referred to as a HARQ-ACK codebook. The HARQ-ACK codebook may be categorized as a semi-static HARQ-ACK codebook and a dynamic HARQ-ACK codebook according to a HARQ-ACK payload determination scheme.

In the case of the semi-static HARQ-ACK codebook, parameters related to a HARQ-ACK payload size that the UE is to report are semi-statically determined by a (UE-specific) higher layer (e.g., RRC) signal. The HARQ-ACK payload size of the semi-static HARQ-ACK codebook, e.g., the (maximum) HARQ-ACK payload (size) transmitted through one PUCCH in one slot, may be determined based on the number of HARQ-ACK bits corresponding to a combination (hereinafter, bundling window) of all DL carriers (i.e., DL serving cells) configured for the UE and all DL scheduling slots (or PDSCH transmission slots or PDCCH monitoring slots) for which the HARQ-ACK transmission timing may be indicated. That is, in a semi-static HARQ-ACK codebook scheme, the size of the HARQ-ACK codebook is fixed (to a maximum value) regardless of the number of actually scheduled DL data. For example, DL grant DCI (PDCCH) includes PDSCH-to-HARQ-ACK timing information, and the PDSCH-to-HARQ-ACK timing information may have one (e.g., k) of a plurality of values. For example, when the PDSCH is received in slot #m and the PDSCH-to-HARQ-ACK timing information in the DL grant DCI (PDCCH) for scheduling the PDSCH indicates k, the HARQ-ACK information for the PDSCH may be transmitted in slot #(m+k). As an example, k ∈ {1, 2, 3, 4, 5, 6, 7, 8}. When the HARQ-ACK information is transmitted in slot #n, the HARQ-ACK information may include possible maximum HARQ-ACK based on the bundling window. That is, HARQ-ACK information of slot #n may include HARQ-ACK corresponding to slot #(n-k). For example, when k ∈ {1, 2, 3, 4, 5, 6, 7, 8}, the HARQ-ACK information of slot #n may include HARQ-ACK corresponding to slot #(n-8) to slot #(n-1) regardless of actual DL data reception (i.e., HARQ-ACK of a maximum number). Here, the HARQ-ACK information may be replaced with a HARQ-ACK codebook or a HARQ-ACK payload. A slot may be understood/replaced as/with a candidate occasion for DL data reception. As described in the example, the bundling window may be determined based on the PDSCH-to-HARQ-ACK timing based on a HARQ-ACK slot, and a PDSCH-to-HARQ-ACK timing set may have predefined values (e.g., {1, 2, 3, 4, 5, 6, 7, 8}) or may be configured by higher layer (RRC) signaling. In the case of the dynamic HARQ-ACK codebook, the HARQ-ACK payload size that the UE is to report may be dynamically changed by the DCI etc. In the dynamic HARQ-ACK codebook scheme, DL scheduling DCI may include a counter-DAI (i.e., c-DAI) and/or a total-DAI (i.e., t-DAI). Here, the DAI indicates a downlink assignment index and is used for the BS to inform the UE of transmitted or scheduled PDSCH(s) for which HARQ-ACK(s) are to be included in one HARQ-ACK transmission. Particularly, the c-DAI is an index indicating order between PDCCHs carrying DL scheduling DCI (hereinafter, DL scheduling PDCCHs), and t-DAI is an index indicating the total number of DL scheduling PDCCHs up to a current slot in which a PDCCH with the t-DAI is present.

In the NR system, a method of implementing a plurality of logical networks in a single physical network is considered. The logical networks need to support services with various requirements (e.g., eMBB, mMTC, URLLC, etc.). Accordingly, a physical layer of NR is designed to support a flexible transmission structure in consideration of the various service requirements. As an example, the physical layer of NR may change, if necessary, an OFDM symbol length (OFDM symbol duration) and a subcarrier spacing (SCS) (hereinafter, OFDM numerology). Transmission resources of physical channels may also be changed in a predetermined range (in units of symbols). For example, in NR, a PUCCH (resource) and a PUSCH (resource) may be configured to flexibly have a transmission length/transmission start timing within a predetermined range.

A PDCCH is transmitted through a control resource set (CORESET). One or more CORESETs may be configured for the UE. The CORESET consists of a set of PRBs with a duration of 1 to 3 OFDM symbols. The PRBs and a CORESET duration that constitute the CORESET may be provided to the UE through higher layer (e.g., RRC) signaling. A set of PDCCH candidates in the configured CORESET(s) is monitored according to corresponding search space sets. In the present disclosure, monitoring implies decoding (called blind decoding) each PDCCH candidate according to monitored DCI formats. A master information block (MIB) on a PBCH provides parameters (e.g., CORESET#0 configuration) for monitoring a PDCCH for scheduling a PDSCH carrying system information block 1 (SIB1) to the UE. The PBCH may also indicate that there is no associated SIB1. In this case, the UE may be provided with not only a frequency range in which the UE may assume that there is no SSB associated with SSB1 but also other frequencies to search for an SSB associated with SIB1. CORESET #0, which is a CORESET for scheduling SIB1 at least, may be configured by the MIB or dedicated RRC signaling.

A set of PDCCH candidates monitored by the UE is defined in terms of PDCCH search space sets. The search space set may be a common search space (CSS) set or a UE-specific search space (USS) set. Each CORESET configuration is associated with one or more search space sets, and each search space set is associated with one CORESET configuration. The search space set is determined based on the following parameters provided by the BS to the UE.
- *controlResourceSetId*: an identifier for identifying a CORESET p associated with a search space set s.
- *monitoringSlotPeriodicityAndOffset*: a PDCCH monitoring periodicity of slots kₛ and a PDCCH monitoring offset of oₛ slots to configure slots for PDCCH monitoring.
- *duration:* a duration of Tₛ < kₛ slots indicating a number of slots in which the search space set s exists.
- *monitoringSymbolsWithinSlot*: a PDCCH monitoring pattern within a slot, indicating first symbol(s) of the CORESET within a slot for PDCCH monitoring.
- *nrofCandidates*: a number of PDCCH candidates per CCE aggregation level.
- searchSpaceType: an indication that search space set s is either a CCE set or a USS set.

The parameter *monitoringSymbolsWithinSlot* may indicate the first symbol(s) for PDCCH monitoring in the slots configured for PDCCH monitoring (e.g., see *monitoringSlotPeriodicityAndOffset* and *duration*). For example, when *monitoringSymbolsWithinSlot* is a 14-bit parameter, the most significant (leftmost) bit may represent the first OFDM symbol in the slot, and the second most significant (leftmost) bit may represent the second OFDM symbol in the slot. In this way, the bits of *monitoringSymbolsWithinSlot* may represent the 14 OFDM symbols of the slot, respectively. For example, bit(s) set to 1 among the bits in *monitoringSymbolsWithinSlot* may identify the first symbol(s) of the CORESET in the slot.

A UE monitors PDCCH candidates in PDCCH monitoring occasions only. The UE determines a monitoring occasion on an active DL BWP from the PDCCH monitoring periodicity, the PDCCH monitoring offset, and the PDCCH monitoring pattern within a slot. In some implementations, for search space set s, the UE determines that a PDCCH monitoring occasion(s) existing in a slot with number n^{u}_{s,f} in a frame with number n_{f} if (n_{f}*N^{frame,u}ₛₗₒₜ + n^{u}_{s,f} - oₛ) mod kₛ =0. The UE monitors PDCCH candidates for search space set s for Tₛ consecutive slots, starting from slot n^{U}_{s,f}, and does not monitor PDCCH candidates for search space set s for the next kₛ - Tₛ.

The following table lists DCI formats that may be carried by a PDCCH.

**Table 8**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying a group of UEs of PRB(s) and OFDM symbol(s) where UE cancels the corresponding UL transmission from the UE |

DCI format 0_0 may be used to schedule a transport block (TB)-based (or TB-level) PUSCH, and DCI format 0_1 may be used to schedule the TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule the TB-based (or TB-level) PDSCH or a CBG-based (or CBG-level) PDSCH. In the case of a CSS, DCI format 0_0 and DCI format 1_0 have a fixed size after a BWP size is initially given by RRC. In the case of a USS, in DCI format 0_0 and DCI format 1_0, the size of fields except for the size of a frequency domain resource assignment (FDRA) field is fixed, whereas the size of the FDRA field may be changed through a related parameter configuration by the BS. In DCI format 0_1 and DCI format 1_1, the size of a DCI field may be changed through various RRC reconfigurations by the BS. DCI format 2_0 may be used to transfer dynamic slot format information (e.g., slot format indicator (SFI) DCI) to the UE, and DCI format 2_1 may be used to transfer DL preemption information to the UE. DCI format 2_4 may be used to indicate a UL resource on which the UE should cancel UL transmission.

In a wireless communication system including the BS and the UE, when the UE transmits UCI on a PUCCH, a PUCCH resource may overlap with another PUCCH resource or a PUSCH resource on the time axis. For example, (1) a PUCCH (resource) and a PUCCH (resource) (for different UCI transmission) or (2) a PUCCH (resource) and a PUSCH (resource) may overlap on the time axis (in the same slot) in terms of the same UE. The UE may not support PUCCH-PUCCH simultaneous transmission or PUCCH-PUSCH simultaneous transmission (according to restrictions on UE capability or according to configuration information received from the BS). In addition, the UE may not be permitted to simultaneously transmit a plurality UL channels within a predetermined time range.

In the present disclosure, methods of handling a plurality of UL channels when the UL channels that the UE should transmit are present in a predetermined time range are described. In the present disclosure, methods of handling UCI and/or data that should have been transmitted/received on the UL channels are also described. The following terms are used in a description of examples in the present disclosure.
- UCI: UCI implies control information that the UE transmits on UL. The UCI includes multiple types of control information (i.e., UCI types). For example, the UCI may include HARQ-ACK (shortly, A/N or AN), SR, and /or CSI.
- UCI multiplexing: UCI multiplexing may mean an operation of transmitting different UCIs (UCI types) on a common physical UL channel (e.g., a PUCCH or PUSCH). UCI multiplexing may include multiplexing of different UCIs (UCI types). For convenience, the multiplexed UCI is referred to as MUX UCI. Further, UCI multiplexing may include an operation performed in relation to MUX UCI. For example, UCI multiplexing may include a process of determining a UL channel resource to transmit MUX UCI.
- UCI/data multiplexing: UCI/data multiplexing may mean an operation of transmitting UCI and data on a common physical UL channel (e.g., PUSCH). UCl/data multiplexing may include an operation of multiplexing UCI with data. For convenience, the multiplexed UCI is referred to as MUX UCl/data. Further, UCl/data multiplexing may include an operation performed in relation to MUX UCl/data. For example, UCl/data multiplexing may include a process of determining a UL channel resource to transmit MUX UCl/data.
- Slot: Slot means a basic time unit or time interval for data scheduling. A slot includes a plurality of symbols. Here, a symbol may be an OFDM-based symbol (e.g., a CP-OFDM symbol or DFT-s-OFDM symbol).
- Overlapping UL channel resource(s): Overlapping UL channel resource(s) mean UL channel (e.g., PUCCH or PUSCH) resource(s) overlapping (at least partially) with each other on the time axis within a predetermined time period (e.g., slot). Overlapping UL channel resource(s) may imply UL channel resource(s) before UCI multiplexing is performed. In the present disclosure, (at least partially) overlapping UL channels on the time axis are referred to as colliding UL channels in time or in the time domain.

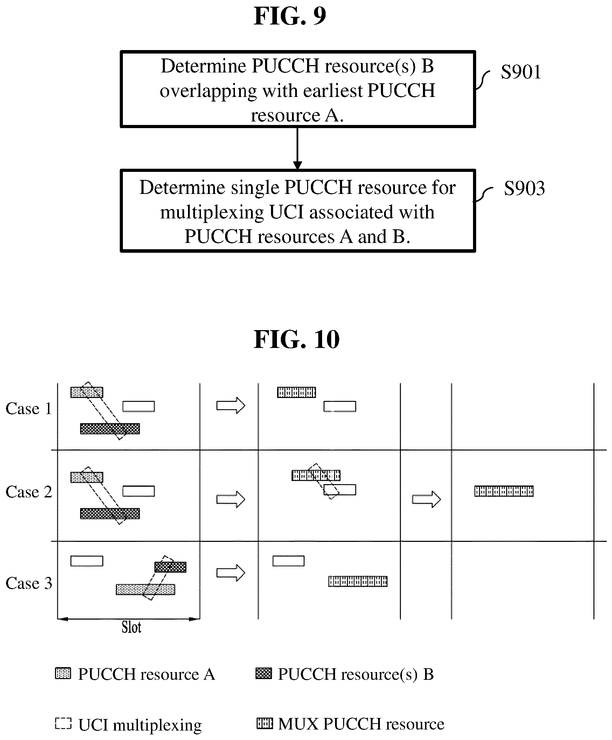

FIG. 9 illustrates an example of a process for a UE with overlapping PUCCHs in a single slot to handle collision between UL channels.

To transmit UCI, the UE may determine PUCCH resources for each UCI. Each PUCCH resource may be defined by a start symbol and a transmission interval. When PUCCH resources for PUCCH transmission overlap in a single slot, the UE may perform UCI multiplexing based on a PUCCH resource with the earliest start symbol. For example, the UE may determine overlapping PUCCH resource(s) (in time) (hereinafter, PUCCH resource(s) B) based on a PUCCH resource with the earliest start symbol (hereinafter, PUCCH resource A) in a slot (S901). The UE may apply a UCI multiplexing rule to the PUCCH resource A and the PUCCH resource(s) B. For example, based on UCI A of the PUCCH resource A and UCI B of the PUCCH resource(s) B, MUX UCI including all or part of the UCI A and the UCI B may be obtained according to the UCI multiplexing rule. To multiplex UCI associated with the PUCCH resource A and the PUCCH resource(s) B, the UE may determine a single PUCCH resource (hereinafter, MUX PUCCH resource) (S903). For example, the UE determines a PUCCH resource set corresponding to a payload size of the MUX UCI (hereinafter, PUCCH resource set X) among PUCCH resource sets configured or available for the UE and determines one of PUCCH resources belonging to the PUCCH resource set X as a MUX PUCCH resource. For example, the UE may determine one of the PUCCH resources belonging to the PUCCH resource set X as the MUX PUCCH resource, using a PUCCH resource indicator field in the last DCI among DCIs having a PDSCH-to-HARQ feedback timing indicator field that indicates the same slot for PUCCH transmission. The UE may determine the total number of PRBs of the MUX PUCCH resource based on the payload size of the MUX UCI and a maximum code rate for a PUCCH format of the MUX PUCCH resource. If the MUX PUCCH resource overlaps with other PUCCH resources (except for the PUCCH resource A and the PUCCH resource(s) B), the UE may perform the above-described operation again based on the MUX PUCCH resource (or a PUCCH resource having the earliest start symbol among the other PUCCH resources including the MUX PUCCH resource).

FIG. 10 illustrates cases for performing UCI multiplexing based on FIG. 9. Referring to FIG. 10, when a plurality of PUCCH resources overlap in a slot, UCI multiplexing may be performed based on the earliest PUCCH resource A (e.g., PUCCH resource A with the earliest start symbol). In FIG. 10, Case 1 and Case 2 show that the first PUCCH resource overlaps with another PUCCH resource. In this case, the process of FIG. 9 may be performed in a state in which the first PUCCH resource is regarded as the earliest PUCCH resource A. In contrast, Case 3 shows that the first PUCCH resource does not overlap with another PUCCH resource and the second PUCCH resource overlaps with another PUCCH resource. In Case 3, UCI multiplexing is not performed on the first PUCCH resource. Instead, the process of FIG. 9 may be performed in a state in which the second PUCCH resource is regarded as the earliest PUCCH resource A. Case 2 shows that a MUX PUCCH resource determined to transmit the multiplexed UCI newly overlaps with another PUCCH resource. In this case, the process of FIG. 9 may be additionally performed in a state in which the MUX PUCCH resource (or the earliest PUCCH resource (e.g., a PUCCH resource having the earliest start symbol) among the other PUCCH resources including the MUX PUCCH resource) is regarded as the earliest PUCCH resource A.

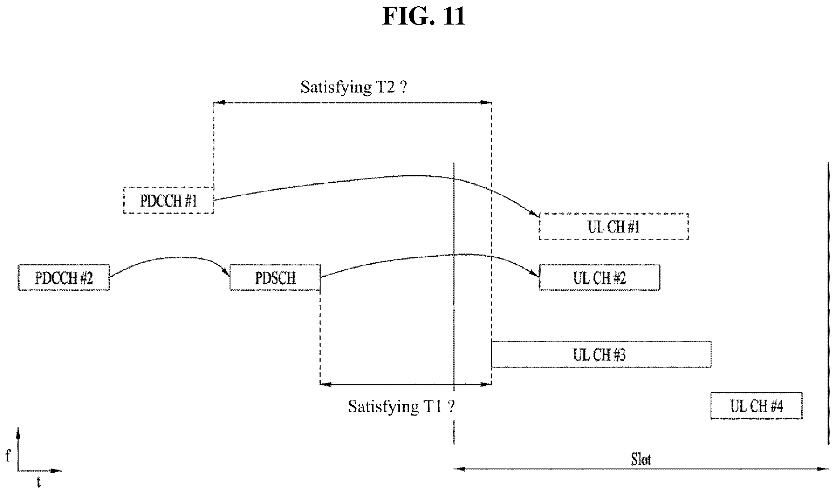

FIG. 11 illustrates UCI multiplexing considering a timeline condition. When the UE performs UCI and/or data multiplexing for overlapping PUCCH(s) and/or PUSCH(s) on the time axis, the UE may be lacking in processing time for UCI and/or data multiplexing due to flexible UL timing configuration for the PUCCH or the PUSCH. In order to prevent the processing time of the UE from being insufficient, two timeline conditions (hereinafter, multiplexing timeline conditions) described below are considered in a process of performing UCI/data multiplexing for the overlapping PUCCH(s) and/or PUSCH(s) (on the time axis).
(1) The last symbol of a PDSCH corresponding to HARQ-ACK information is received before time T1 from the start symbol of the earliest channel among the overlapping PUCCH(s) and/or PUSCH(s) (on the time axis). T1 may be determined based on i) a minimum PDSCH processing time N1 defined according to a UE processing capability, and/or ii) d_{1,1} predefined as an integer equal to or greater than 0 according to a position of scheduled symbol(s), PDSCH mapping type, BWP switching, etc.
   For example, T1 may be determined as follows: T1 = (N1 + d_{1,1})*(2048+144)*κ*2^{-u}*T_{c}. N1 is based on *u* of Table 7 and Table 8 for UE processing capabilities #1 and #2, respectively, and *µ* is one of (*µ*_{PDCCH}, *µ*_{PDSCH}, *µ*_{UL}), that causes the largest T1, where *µ*_{PDCCH} corresponds to a subcarrier spacing of a PDCCH for scheduling the PDSCH, *µ*_{PDSCH} corresponds to a subcarrier spacing of the scheduled PDSCH, *µ*_{UL} corresponds to a subcarrier spacing of a UL channel on which HARQ-ACK is to be transmitted, and κ = T_{c}/T_{f} = 64. In Table 7, in the case of N_{1,0}, if a PDSCH DMRS position of an added DMRS is l₁ = 12, then N_{1,0}=14 and, otherwise, N_{1,0}=13 (refer to Section 7.4.1.1.2 of 3GPP TS 38.211). If the last symbol of the PDSCH for PDSCH mapping type A is present on an i-th slot, d_{1,1}=7-i for i<7 and, otherwise, d_{1,1}=0. If the PDSCH has mapping type B for UE processing capability #1, d_{1,1} may be 0 when the number of allocated PDSCH symbols is 7, d_{1,1} may be 3 when the number of allocated PDSCH symbols is 4, d_{1,1} may be 3+d when the number of allocated PDSCH symbols is 2, where d is the number of overlapping symbols of the scheduling PDCCH and the scheduled PDSCH. If the PDSCH mapping type is B for UE processing capability #2, d_{1,1} may be 0 when the number of allocated PDSCH symbols is 7, and d_{1,1} may correspond to the number of overlapping symbols of the scheduling PDCCH and the scheduled PDSCH when the number of allocated PDSCH symbols is 4. Further, if the number of allocated PDSCH symbols is 2, d_{1,1} may be 3 when the scheduling PDSCH is within a 3-symbol CORESET and the CORESET and the PDSCH have the same starting symbol, and d_{1,1} may be the number of overlapping symbols of the scheduling PDCCH and the scheduled PDSCH for the other cases. In the present disclosure T1 may also be referred to as T_proc,1.
(2) The last symbol of a (e.g., triggering) PDCCH for indicating PUCCH or PUSCH transmission is received before time T2 from the start symbol of the earliest channel among overlapping PUCCH(s) and/or PUSCH(s) (on the time axis). T2 may be determined based on i) a minimum PUSCH preparation time N1 defined according to a UE PUSCH timing capability, and/or ii) d_{2,x} predefined as an integer equal to or greater than 0 according to the scheduled symbol position, BWP switching, etc. d_{2,x} may be categorized into d_{2,1} related to the position of scheduled symbol(s) and d_{2,2} related to BWP switching.

For example, T2 may be determined as follows: T2 = max{(N2 + d_{2,1})*(2048+144)*κ*2^{-u}*T_{c} + Tₑₓₜ + T_{switch}, d_{2,2}}. N2 is based on *u* of Table 9 and Table 10 for UE timing capabilities #1 and #2, respectively, and *µ* is one of (*µ*_{DL}, *µ*_{UL}). that causes the largest T1, where *µ*_{DL} corresponds to a subcarrier spacing of a PDCCH carrying DCI for scheduling a PUSCH, *µ*_{UL} corresponds to a subcarrier spacing of the PUSCH, and κ = T_{c}/T_{f} = 64. If the first symbol of PUSCH allocation is composed only of a DMRS, then d_{2,1} may be 0 and, otherwise, d_{2,1} may be 1. If the scheduling DCI has triggered BWP switching, d_{2,2} is equal to a switching time and, otherwise, d_{2,2} is 0. The switching time may be differently defined depending on a frequency range (FR). For example, the switching time may be defined as 0.5 ms for FR1 and as 0.25 ms for FR2. In the present disclosure, T2 may also be referred to as T_proc,2.

Tables below show processing times according to UE processing capability. Particularly, Table 9 shows a PDSCH processing time for PDSCH processing capability #1 of the UE, Table 10 shows a PDSCH processing time for PDSCH processing capability #2 of the UE, Table 11 shows a PUSCH preparation time for PUSCH timing capability #1 of the UE, and Table 12 shows a PUSCH processing time for PUSCH timing capability #2 of the UE.

**Table 9**

| *u* / *SCS* | PDSCH decoding time N1 [symbols] | |
|---|---|---|
| | Front-loaded DMRS only | Front-loaded + additional DMRS |
| 0 / 15kHz | 8 | N_{1,0} |
| 1 / 30kHz | 10 | 13 |
| 2 / 60kHz | 17 | 20 |
| 3 / 120kHz | 20 | 24 |

**Table 10**

| *u* / *SCS* | PDSCH decoding time N1 [symbols] |
|---|---|
| 0 / 15kHz | 3 |
| 1 / 30kHz | 4.5 |
| 2 / 60kHz | 9 for frequency range 1 |

**Table 11**

| *u* / *SCS* | PUSCH preparation time N2 [symbols] |
|---|---|
| 0 / 15kHz | 10 |
| 1 / 30kHz | 12 |
| 2 / 60kHz | 23 |
| 3 / 120kHz | 36 |

**Table 12**

| *u*/*SCS* | PUSCH preparation time N2 [symbols] |
|---|---|
| 0 / 15kHz | 5 |
| 1 / 30kHz | 5.5 |
| 2 / 60kHz | 11 for frequency range 1 |

If the UE configured to multiplex different UCI types within one PUCCH intends to transmit a plurality of overlapping PUCCHs in a slot or transmit overlapping PUCCH(s) and PUSCH(s) in a slot, the UE may multiplex the UCI types when specific conditions are fulfilled. The specific conditions may include multiplexing timeline condition(s). For example, PUCCH(s) and PUSCH(s) to which UCI multiplexing is applied in FIGS. 9 to 10 may be UL channels that satisfy the multiplexing timeline condition(s). Referring to FIG. 11, the UE may need to transmit a plurality of UL channels (e.g., UL channels #1 to #4) in the same slot. Here, UL CH #1 may be a PUSCH scheduled by PDCCH #1. UL CH #2 may be a PUCCH for transmitting HARQ-ACK for a PDSCH. The PDSCH is scheduled by PDCCH #2 and a resource of UL CH #2 may also be indicated by PDCCH #2.

In this case, if overlapping UL channels (e.g., UL channels #1 to #3) on the time axis satisfy the multiplexing timeline condition, the UE may perform UCI multiplexing for overlapping UL channels #1 to #3 on the time axis. For example, the UE may check whether the first symbol of UL CH #3 from the last symbol of the PDSCH satisfies the condition of T1. The UE may also check whether the first symbol of UL CH #3 from the last symbol of PDCCH #1 satisfies the condition of T2. If the multiplexing timeline condition is satisfied, the UE may perform UCI multiplex for UL channels #1 to #3. In contrast, if the earliest UL channel (e.g., UL channel having the earliest start symbol) among overlapping UL channels does not satisfy the multiplexing timeline condition, the UE may not be allowed to multiplex all of the corresponding UCI types.

As described above, in the NR system, UL or DL scheduling may be performed dynamically (e.g., via scheduling DCI) or semi-statically (e.g., by RRC signaling). For example, the BS may configure or indicate, for or to the UE, a transmission direction of each symbol (e.g., DL, UL, or flexible) semi-statically using a *tdd-UL-DL-ConfigurationCommon* or *tdd-UL-DL-ConfigurationDedicated* message or dynamically using DCI format 2_0. According to the transmission direction configured or indicated in this way, UL or DL scheduling configured with a transmission direction opposite to or not coincident with the configured or indicated transmission direction may be canceled.

In the 3GPP LTE-based wireless communication system, in the case of TDD, a DL SPS interval is a positive integer multiple of 10 subframes. For example, even if the BS configures a SPS interval value, which is not a multiple of 10, for a cell, the UE considers that assignment of a DL SPS configuration appears at an interval of an integer multiple of 10 subframes by rounding the SPS interval value down to an integer which is the nearest multiple of 10. For example, in the case of TDD, a DL SPS interval sf10 corresponds to 10 subframes, sf32 corresponds to 30 subframes, and sf128 corresponds to 120 subframes. In the 3GPP LTE-based wireless communication system, in the case of TDD, since the DL SPS interval is a positive integer multiple of 10 subframes and a TDD UL-DL configuration is also applied at an interval of 10 subframes, the BS will not configure DL assignment according to the DL SPS configuration to appear in a transmission direction different from a transmission direction according to the TDD UL-DL configuration. In addition, in the 3GPP LTE-based wireless communication system, in the case of TDD, a response time suitable for the TDD UL-DL configuration is defined so that a HARQ-ACK response to a PDSCH is not assigned to a subframe of a different transmission direction (e.g., see Table 10.1.3-1 of 3GPP TS 36.213).

Meanwhile, in the 3GPP-based wireless communication system defined up to now, if UL/DL transmission is scheduled/triggered in DCI, the UE does not expect that a transmission direction of UL/DL transmission will collide with a transmission direction configured/indicated by an RRC message *tdd-UL-DL-ConfigurationCommon* or *tdd-UL-DL-ConfigurationDedicated* or by DCI format 2_0. However, SPS, which is configured according to attributes of DL traffic, may be configured by UE-specific parameters, whereas TDD configuration, which is configured according to circumstances such as BS deployment, is not UE-specifically configured. In addition, the periodicity of DL assignment according to DL SPS and the periodicity of the TDD UL-DL configuration may not be an integer multiple of each other. Therefore, SPS-based UL/DL transmission and corresponding HARQ-ACK transmission may be canceled by the RRC message *tdd-UL-DL-ConfigurationCommon* or *tdd-UL-DL-ConfigurationDedicated* or by DCI format 2_0. In the prior art, when a PUCCH configured for HARQ-ACK transmission for an SPS PDSCH (hereinafter, SPS HARQ-ACK transmission) is canceled by a configured or indicated transmission direction, the UE has been incapable of performing corresponding SPS HARQ-ACK transmission without additional PDSCH scheduling. This eventually causes unnecessary PDSCH scheduling or makes it difficult for the BS to perform DL transmission using such an SPS PDSCH.

In the present disclosure, method(s) of performing HARQ-ACK transmission for a PDSCH associated with PUCCH transmission when the UE is incapable of performing some of SPS-based PUCCH transmissions is described.

In the present disclosure, method(s) in which, when PUCCH transmission for SPS HARQ-ACK of the UE is canceled, the UE and the BS select another UL channel (e.g., PUCCH) in order to transmit corresponding HARQ-ACK information on another UL channel, and method(s) of multiplexing HARQ-ACK information with existing UCI are described. For example, when PUCCH transmission for specific SPS HARQ-ACK is not possible by a TDD operation, a method for the UE and BS to select another available PUCCH resource and/or, when the HARQ-ACK information is transmitted using a corresponding PUCCH resource, a method of multiplexing SPS HARQ-ACK with other UCI (e.g., HARQ-ACK, CSI, and/or SR) scheduled in advance for a corresponding PUCCH is described. Therethrough, the BS may more freely configure a TDD configuration and configure an SPS PDSCH resource for the UE, and the UE may transmit a given SPS HARQ-ACK response to the BS using an available UL resource and channel through the proposed method(s) even if a PUCCH for an initially given SPS PDSCH is unavailable by the TDD operation.

While implementation(s) of the present disclosure to be described later are described based on SPS, examples of the present disclosure may be extended and applied to dynamic DL scheduling. When the implementations of the present disclosure are applied to dynamic DL scheduling-based transmission, an SPS PDSCH may correspond to a PDSCH scheduled by DCI format 1_x, and an SPS configuration (e.g., information element (IE) *sps-Config*) may include RRC parameter(s) included in an IE *PDSCH-config* and/or information that may be transmitted through DCI format 1_x.

### UE side:

First, implementations of the present disclosure will be described from the viewpoint of the UE.

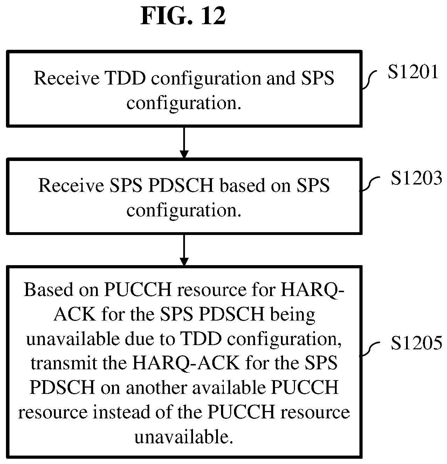

FIG. 12 illustrates a HARQ-ACK transmission flow according to some implementations of the present disclosure.

In some implementations of the present disclosure, the UE may determine PUCCH resource(s) for SPS.

The UE may receive a TDD configuration and an SPS configuration from the BS through higher layer (e.g., RRC) signaling (S1201). In other words, the UE may receive RRC parameters associated with TDD and SPS from the BS. For example, the UE may receive RRC parameters included in an IE *tdd-UL-DL-ConfigCommon,* an IE *tdd-UL-DL-ConfigDedicated,* an IE *PUCCH-config,* an IE *PDSCH-config,* and/or an IE *sps-Config.* In addition, the UE may receive parameters related to a search space and a CORESET (e.g., an IE *Searchspace,* an IE *ControlResourceSet,* etc.), for SPS and DCI reception required for slot format determination. The operation of the UE receiving the RRC parameters associated with TDD and SPS through RRC signaling from the BS may be implemented by, for example, the devices of FIG. 2 or FIG. 3. For example, referring to FIG. 2, the one or more processors 102 may control the one or more transceivers 106 and/or the one or more memories 104 to receive the parameters associated with TDD and SPS through RRC signaling, and the one or more transceivers 106 may receive the RRC parameters associated with TDD and SPS from the BS through the RRC signaling. In some scenarios, the higher layer (e.g., RRC) parameters may be received in an RRC connection setup process of an initial access procedure.

The UE may determine an unavailable PUCCH resource among PUCCH resources associated with a given SPS PDSCH based on the TDD configuration and the SPS configuration. Depending on whether the IE *tdd-UL-DL-configCommon* and/or the IE *tdd-UL-DL-configDedicated* has been configured, the UE may determine, for example, whether PUCCH transmission associated with SPS (e.g., transmission on a PUCCH associated with the SPS configuration (e.g., transmission on a PUCCH resource configured by a parameter *n1PUCCH-AN* in the IE *SPS-Config* or by *SPS-PUCCH-AN-List* in the IE *PUCCH-Config*)) is possible. The operation of the UE determining whether PUCCH transmission associated with the SPS PDSCH is possible based on the TDD configuration and the SPS configuration may be implemented by the devices of FIG. 2 or FIG. 3. For example, referring to FIG. 2, the one or more processors 102 may determine a transmission direction of each symbol according to whether the IE *tdd-UL-DL-configCommon* and/or the IE *tdd-UL-DL-configDedicated* has been configured and determine whether PUCCH transmission associated with SPS is possible according to the transmission direction of each symbol.

The UE may receive the SPS PDSCH based on the SPS configuration activated through activation DCI (S1203). A PUCCH resource on which HARQ-ACK for the SPS PDSCH will be transmitted may be unavailable due to the TDD configuration.

When a PUCCH resource associated with the SPS configuration is unavailable and other HARQ-ACK PUCCHs are not dynamically scheduled in a subslot or a slot in which a corresponding PUCCH is scheduled, the UE may transmit a HARQ-ACK response that should be transmitted on the unavailable PUCCH resource by using another (available) PUCCH resource for a HARQ-ACK response to the SPS PDSCH (S1205). In this case, the other (available) PUCCH resource may be selected according to one of the following methods.
A. The UE may select the earliest available PUCCH resource determined by an SPS configuration having the same configuration index as the SPS configuration for the SPS PDSCH.
B. The UE may select a PUCCH resource for SPS (hereinafter, SPS PUCCH resource), which is earliest available, determined by an SPS configuration which is equal to or different from the SPS configuration for the SPS PDSCH.
C. The UE may select the earliest configured PUCCH resource. For example, the UE may select another SPS PUCCH resource closest to the unavailable SPS PUCCH resource or select a PUCCH resource for a periodic CSI report.

The UE performs HARQ-ACK transmission for the SPS PDSCH through a PUCCH resource determined according to some implementations of the present disclosure. For example, the UE may transmit a HARQ-ACK response to the SPS PDSCH using an adjacent PUCCH resource when a PUCCH resource configured for any SPS PDSCH is unavailable by the TDD configuration (e.g., the IE *tdd-UL-DL-configCommon* and/or *tdd-UL-DL-configDedicated*)*.*

In implementations of the present disclosure, the following UE operations may be considered.

### <Implementation A1>

When the UE receives an SPS configuration, receives an SPS PDSCH based on the SPS configuration, and transmits a HARQ-ACK response to the SPS PDSCH, the UE may transmit the HARQ-ACK response using an adjacent PUCCH resource B instead of a corresponding HARQ-ACK PUCCH resource A. This operation may be limited to the case in which the HARQ-ACK PUCCH resource A is canceled/excluded by L1 signaling (e.g., DCI format 2_0) and/or higher layer signaling (e.g., a TDD UL-DL configuration). In other words, when the HARQ-ACK PUCCH resource A for SPS HARQ-ACK transmission is unavailable due to a TDD transmission direction, SPS HARQ-ACK transmission may be deferred to be transmitted on another available PUCCH resource B.

The PUCCH resource A may be restricted to a PUCCH resource derived using the parameter *n1PUCCH-AN* included in the SPS configuration (e.g., IE *sps-Config*) received by the UE or using the parameter *SPS-PUCCH-AN-List* included in a PUCCH configuration (e.g., IE *PUCCH-Config*). For example, if other PUCCH transmissions are not indicated for or not configured in the same slot or subslot so that a PUCCH which is configured through the SPS configuration or in association with the SPS configuration is used for HARQ-ACK transmission for the SPS PDSCH, Implementation A1 may be used.

Although PUCCH transmission may also be canceled through L1 signaling of DCI format 2_0 or DCI format 1_x series (e.g., DCI format 1_0, DCI format 1_1, or DCI format 1_2), such L1 signaling is transmitted without automatic repeat request (ARQ), so the UE and the BS may transmit/receive the PUCCH under different assumptions in the case in which the UE misses L1 signaling reception. Therefore, in order to prevent such inconsistency, Implementation A1 may be applied only when the PUCCH resource A is unavailable or may be unavailable due to semi-static information. For example, when one or more symbols included in the PUCCH resource A are indicated as DL symbols through a TDD UL-DL configuration (e.g., *tdd-UL-DL-configCommon* and/or *tdd-UL-DL-configDedicated*)*,* the PUCCH resource A may be determined to be unavailable. Even if the UE is configured to receive DCI format 2_0, the PUCCH resource A may be determined to be an unavailable PUCCH resource only when one or more symbols included in the PUCCH resource A are indicated as DL symbols or flexible symbols through the TDD UL-DL configuration (e.g., *tdd-UL-DL-configCommon* and/or *tdd-UL-DL-configDedicated*)*.*

The other PUCCH resource B may be selected through the following methods.
- Method 1. When one SPS HARQ-ACK response is included in the PUCCH resource A, the earliest (available) PUCCH occasion among PUCCHs configured by an SPS configuration associated with the SPS HARQ-ACK response, or a PUCCH resource associated with an SPS PDSCH of the next period of the same SPS configuration as an SPS configuration of an SPS PDSCH associated with the SPS HARQ-ACK response may be selected.
- Method 2. When one or plural SPS HARQ-ACK responses are included in the PUCCH resource A, the earliest (available) PUCCH resource among PUCCH resources used by SPS configurations associated with the corresponding SPS HARQ-ACK response(s) may be selected.
- Method 3. Regardless of SPS HARQ-ACK included in the PUCCH resource A, the earliest (available) PUCCH resource among PUCCH resources used by an SPS configuration configured for the UE may be selected.
- Method 4. The earliest available configured PUCCH resource after the corresponding PUCCH resource, more specifically, the earliest (available) PUCCH resource among PUCCH resources configured by RRC signaling such as a periodic CSI report, may be selected.

In Method 1 to Method 4, the PUCCH resource B may be limited to a PUCCH resource obtained through the parameter *n1PUCCH-AN* or the parameter *SPS-PUCCH-AN-List.*

### <Implementation A1-1>

In Implementation A1, the UE may determine whether a PUCCH resource is valid/available or invalid/unavailable and select only the valid/available PUCCH resource as the PUCCH resource B.

In implementation A1-1, the UE may consider *tdd-UL-DL-configCommon, tdd-UL-DL-configDedicated,* and/or DCI format 2_0 in order to determine the availability or unavailability of the PUCCH resource. In this case, the same method as the method for determining whether the PUCCH resource A is available or unavailable may be used. As an example, when one or more symbols included in a certain PUCCH resource are indicated as DL symbols through *tdd-UL-DL-configCommon* and/or *tdd-UL-DL-configDedicated,* the UE may determine that the PUCCH resource is unavailable and select the PUCCH resource B only from among the other PUCCH resources.

Alternatively, in implementation A1-1, a processing time line may be considered. For example, the UE and the BS may expect that a sufficient interval (e.g., T_{proc,1} or N1 symbols) will be guaranteed from the last symbol of any PDSCH associated with the PUCCH resource A to the start symbol of the PUCCH resource B and select the PUCCH resource B from among such PUCCH resource(s). For example, the PUCCH resource B may be selected from among PUCCH resource(s) that do not start earlier than after T_{proc,1} or N1 symbols from the end of the last symbol of the SPS PDSCH.

A plurality of overlapping criteria may be considered to determine the availability or unavailability of such a PUCCH resource. In this case, a resource determined to be available in all of the plurality of criteria may be determined as an available PUCCH resource or a resource determined to be unavailable in at least one of the criteria may be determined as an unavailable PUCCH resource. As an example, the PUCCH resource B may be selected from among PUCCH resource(s) in which one or more symbols included in a certain PUCCH resource are not indicated as DL through *tdd-UL-DL-configCommon* and/or *tdd-UL-DL-configDedicated* and a sufficient interval (e.g., T_{proc,1} or N1 symbols) is guaranteed until a start symbol of the PUCCH resource B from the last symbol of the PUCCH resource.

### <Implementation A2>

In implementation A1, if there is another configured PUCCH or a UCI transmission opportunity in a slot or sub-slot, whether to apply Implementation A1 may be determined in consideration of the other configured PUCCH or the UCI transmission opportunity and a target PUCCH to be used may be changed.

In some scenarios, when a plurality of PUCCH transmissions is indicated for or configured in one slot or sub-slot, UCI to be transmitted in these PUCCH transmissions is multiplexed into one or two PUCCHs and then transmitted. Therefore, even if one PUCCH is unavailable from the viewpoint of TDD, a PUCCH selected in consideration of UCI multiplexing may be available. Taking this into consideration, in Implementation A2, Implementation A1 is selectively applied based on information semi-statically received by the UE.

For example, when the UE is configured to perform a plurality of overlapping PUCCH transmissions (in time) in one slot or sub-slot or to transmit one or more overlapping PUCCHs and PUSCHs (in time) in one slot or sub-slot and when at least one of the overlapping PUCCHs includes HARQ-ACK information for SPS PDSCH reception, the UE may limitedly apply Implementation A1 only when a PUCCH resource used when assuming that configured PUCCH transmission and UCI associated therewith are multiplexed is unavailable. For example, when a PUCCH selected in consideration of the multiplexed UCI is an available PUCCH, SPS HARQ-ACK may be transmitted on the PUCCH selected in consideration of the multiplexed UCI, and only when the PUCCH selected in consideration of the multiplexed UCI is an unavailable PUCCH, another available PUCCH may be used for transmission of SPS HARQ-ACK. In other words, in consideration of not only a PUCCH used for a HARQ-ACK response to the SPS PDSCH but also another configured PUCCH/PUSCH transmission (e.g., semi-persistent/periodic CSI report), Implementation A1 may be applied only when HARQ-ACK transmission for the SPS PDSCH is not possible on a corresponding PUCCH resource. For example, even if a PUCCH to carry SPS HARQ-ACK for SPS PDSCH reception before a multiplexing process is unavailable by the TDD UL-DL configuration and/or a processing time line condition, when a multiplexing PUCCH or a multiplexing PUSCH determined (for UCI/data multiplexing) is available from the viewpoint of the TDD UL-DL configuration and/or the processing time line condition due to overlapping of the PUCCH to carry SPS HARQ-ACK with another PUCCH or PUSCH in time, Implementation A1 may not be applied.

In some implementations, when UCI to be transmitted on PUCCH A, which is an unavailable PUCCH, is transmitted on PUCCH B, which is adjacent another PUCCH, according to Implementation A1, the UCI, which is moved from PUCCH A to PUCCH B and transmitted on PUCCH B, may be limited to HARQ-ACK among UCI which has been scheduled to be transmitted on PUCCH A. For example, when not only SPS HARQ-ACK but also an SR and a CSI report have been scheduled to be transmitted on PUCCH A, only SPS HARQ-ACK, except for the SR and CSI report, may be transmitted on PUCCH B. This serves to reduce UCI overhead by excluding the SR and the CSI since it is difficult to trust the SR and the CSI report and perform channel adaptation when there is a delay in the SR and CSI information.

### BS side:

Hereinbelow, implementations of the present disclosure will be described again in terms of the BS.

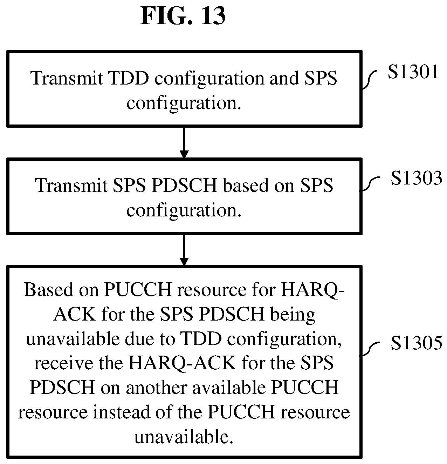

FIG. 13 illustrates a HARQ-ACK reception flow according to some implementations of the present disclosure.

In some implementations of the present disclosure, the BS may determine PUCCH resource(s) for SPS.

The BS may transmit a TDD configuration and an SPS configuration to the UE through higher layer (e.g., RRC) signaling (S1301). In other words, the BS may transmit RRC parameters associated with TDD and SPS to the UE. For example, the BS may transmit RRC parameters included in an IE *tdd-UL-DL-ConfigCommon,* an IE *tdd-UL-DL-ConfigDedicated,* an IE *PUCCH-config,* an IE *PDSCH-config,* and/or an IE *sps-Config.* In addition, the BS may transmit parameters related to a search space and a CORESET (e.g., an IE *Searchspace,* an IE *ControlResourceSet,* etc.), for SPS and DCI transmission required for slot format indication. The operation of the BS transmitting the RRC parameters associated with TDD and SPS through RRC signaling to the UE may be implemented by, for example, the devices of FIG. 2 or FIG. 3. For example, referring to FIG. 2, the one or more processors 102 may control the one or more transceivers 106 and/or the one or more memories 104 to transmit at least one parameter associated with TDD and SPS through an RRC configuration, and the one or more transceivers 106 may transmit the at least one RRC parameter associated with TDD and SPS to the UE through the RRC configuration. In some scenarios, the higher layer (e.g., RRC) parameters may be transmitted in an RRC connection setup process of an initial access procedure.

The BS may determine an unavailable PUCCH resource among PUCCH resources associated with a given SPS PDSCH based on the TDD configuration and the SPS configuration. Depending on whether the IE *tdd-UL-DL-configCommon* and/or the IE *tdd-UL-DL-configDedicated* has been configured, the BS may determine, for example, whether PUCCH reception associated with SPS (e.g., transmission on a PUCCH associated with the SPS configuration (e.g., reception on a PUCCH resource configured by a parameter *n1PUCCH-AN* in the IE *SPS-Config* or by *SPS-PUCCH-AN-List* in the IE *PUCCH-Config*)) is possible. The operation of the BS determining whether PUCCH reception associated with the SPS PDSCH is possible based on the TDD configuration and the SPS configuration may be implemented by the devices of FIG. 2 or FIG. 3. For example, referring to FIG. 2, the one or more processors 102 may determine a transmission direction of each symbol according to whether the IE *tdd-UL-DL-configCommon* and/or the IE *tdd-UL-DL-configDedicated* has been configured and determine whether PUCCH reception associated with SPS is possible according to the transmission direction of each symbol.

The BS may transmit the SPS PDSCH based on the SPS configuration activated through activation DCI (S1303). A PUCCH resource on which HARQ-ACK for the SPS PDSCH will be received may be unavailable due to the TDD configuration.

When a PUCCH resource associated with the SPS configuration is unavailable and other HARQ-ACK PUCCHs are not dynamically scheduled in a subslot or a slot in which a corresponding PUCCH is scheduled, the BS may receive a HARQ-ACK response that should be received on the unavailable PUCCH resource by using another (available) PUCCH resource for a HARQ-ACK response to the SPS PDSCH (S1305). In this case, the other (available) PUCCH resource may be selected according to one of the following methods.
A. The BS may select the earliest available PUCCH resource determined by an SPS configuration having the same configuration index as the SPS configuration for the SPS PDSCH.
B. The BS may select a PUCCH resource for SPS (hereinafter, SPS PUCCH resource), which is earliest available, determined by an SPS configuration which is equal to or different from the SPS configuration for the SPS PDSCH.
C. The BS may select the earliest configured PUCCH resource. For example, the UE may select another SPS PUCCH resource closest to the unavailable SPS PUCCH resource or select a PUCCH resource for a periodic CSI report.

The BS receives HARQ-ACK transmission for the SPS PDSCH through a PUCCH resource determined according to some implementations of the present disclosure. For example, the BS may receive PUCCH transmission from the UE under the assumption that a HARQ-ACK response to the SPS PDSCH will be transmitted using an adjacent (available) PUCCH resource when a PUCCH resource configured for any SPS PDSCH is unavailable by the TDD configuration (e.g., the IE *tdd-UL-DL-configCommon* and/or *tdd-UL-DL-configDedicated*)*.*

In implementations of the present disclosure, the following operations may be considered.

### <Implementation B1>

When the BS transmits an SPS configuration, transmits an SPS PDSCH based on the SPS configuration, and receives a HARQ-ACK response to the SPS PDSCH, the BS may receive the HARQ-ACK response using an adjacent PUCCH resource B instead of a corresponding HARQ-ACK PUCCH resource A. This operation may be limited to the case in which the HARQ-ACK PUCCH resource A is canceled/excluded by L1 signaling (e.g., DCI format 2_0) and/or higher layer signaling (e.g., a TDD UL-DL configuration). In other words, when the HARQ-ACK PUCCH resource A for SPS HARQ-ACK is unavailable due to a TDD transmission direction, the BS may receive PUCCH transmission from the UE under the assumption that SPS HARQ-ACK transmission by the UE will be deferred to be transmitted on another available PUCCH resource B.

The PUCCH resource A may be restricted to a PUCCH resource derived using the parameter *n1PUCCH-AN* included in the SPS configuration (e.g., IE *sps-Config*) provided by the BS or using the parameter *SPS-PUCCH-AN-List* included in a PUCCH configuration (e.g., IE *PUCCH-Config*)*.* For example, if other PUCCH transmissions are not indicated for or not configured in the same slot or subslot so that a PUCCH which is configured through the SPS configuration or in association with the SPS configuration is used for HARQ-ACK transmission for the SPS PDSCH, Implementation B1 may be used.

Although PUCCH transmission may also be canceled through L1 signaling of DCI format 2_0 or DCI format 1_x series (e.g., DCI format 1_0, DCI format 1_1, or DCI format 1_2), such L1 signaling is transmitted without ARQ, so the UE and the BS may transmit/receive the PUCCH under different assumptions in the case in which the UE misses L1 signaling reception. Therefore, in order to prevent such inconsistency, Implementation B1 may be applied only when the PUCCH resource A is unavailable or may be unavailable due to semi-static information. For example, when one or more symbols included in the PUCCH resource A are indicated as DL symbols through a TDD UL-DL configuration (e.g., *tdd-UL-DL-configCommon* and/or *tdd-UL-DL-configDedicated*)*,* the PUCCH resource A may be determined to be unavailable. Even if the UE is configured to receive DCI format 2_0 from the BS, the PUCCH resource A may be determined to be an unavailable PUCCH resource only when one or more symbols included in the PUCCH resource A are indicated as DL symbols or flexible symbols through the TDD UL-DL configuration (e.g., *tdd-UL-DL-configCommon* and/or *tdd-UL-DL-configDedicated*)*.*

The other PUCCH resource B may be selected through the following methods.
- Method 1. When one SPS HARQ-ACK response is included in the PUCCH resource A, the earliest (available) PUCCH occasion among PUCCHs configured by an SPS configuration associated with the SPS HARQ-ACK response, or a PUCCH resource associated with an SPS PDSCH of the next period of the same SPS configuration as an SPS configuration of an SPS PDSCH associated with the SPS HARQ-ACK response may be selected.
- Method 2. When one or plural SPS HARQ-ACK responses are included in the PUCCH resource A, the earliest (available) PUCCH resource among PUCCH resources used by SPS configurations associated with the corresponding SPS HARQ-ACK response(s) may be selected.
- Method 3. Regardless of SPS HARQ-ACK included in the PUCCH resource A, the earliest (available) PUCCH resource among PUCCH resources used by an SPS configuration configured for the UE may be selected.
- Method 4. The earliest available configured PUCCH resource after the corresponding PUCCH resource, more specifically, the earliest (available) PUCCH resource among PUCCH resources configured by RRC signaling such as a periodic CSI report, may be selected.

In Method 1 to Method 4, the PUCCH resource B may be limited to a PUCCH resource obtained through the parameter *n1PUCCH-AN* or the parameter *SPS-PUCCH-AN-List.*

### <Implementation B1-1>

In Implementation B1, the BS may determine whether a PUCCH resource is valid/available or invalid/unavailable and select only the valid/available PUCCH resource as the PUCCH resource B.

In implementation B1-1, the BS may consider *tdd-UL-DL-configCommon, tdd-UL-DL-configDedicated,* and/or DCI format 2_0 in order to determine the availability or unavailability of the PUCCH resource. In this case, the same method as the method for determining whether the PUCCH resource A is available or unavailable may be used. As an example, when one or more symbols included in a certain PUCCH resource are indicated as DL symbols through *tdd-UL-DL-configCommon* and/or *tdd-UL-DL-configDedicated,* the BS may determine that the PUCCH resource is unavailable and select the PUCCH resource B only from among the other PUCCH resources.

Alternatively, in implementation B1-1, a processing time line may be considered. For example, the UE and the BS may expect that a sufficient interval (e.g., T_{proc,1} or N1 symbols) will be guaranteed from the last symbol of any PDSCH associated with the PUCCH resource A to the start symbol of the PUCCH resource B and select the PUCCH resource B from among such PUCCH resource(s). For example, the PUCCH resource B may be selected from among PUCCH resource(s) that do not start earlier than after T_{proc,1} or N1 symbols from the end of the last symbol of the SPS PDSCH.

A plurality of overlapping criteria may be considered to determine the availability or unavailability of such a PUCCH resource. In this case, a resource determined to be available in all of the plurality of criteria may be determined as an available PUCCH resource or a resource determined to be unavailable in at least one of the criteria may be determined as an unavailable PUCCH resource. As an example, the PUCCH resource B may be selected from among PUCCH resource(s) in which one or more symbols included in a certain PUCCH resource are not indicated as DL through *tdd-UL-DL-configCommon* and/or *tdd-UL-DL-configDedicated* and a sufficient interval (e.g., T_{proc,1} or N1 symbols) is guaranteed until a start symbol of the PUCCH resource B from the last symbol of the PUCCH resource.

### <Implementation B2>

In implementation B1, if there is another configured PUCCH or a UCI transmission opportunity in a slot or sub-slot, whether to apply Implementation B1 may be determined in consideration of the other configured PUCCH or the UCI transmission opportunity and a target PUCCH to be used may be changed.

In some scenarios, when a plurality of PUCCH transmissions is indicated for or configured in one slot or sub-slot, UCI to be transmitted in these PUCCH transmissions is multiplexed into one or two PUCCHs and then transmitted. Therefore, even if one PUCCH is unavailable from the viewpoint of TDD, a PUCCH selected in consideration of UCI multiplexing may be available. Taking this into consideration, in Implementation B2, Implementation B1 is selectively applied based on information semi-statically transmitted by the BS.

For example, when the BS configures, for the UE, a plurality of overlapping PUCCH transmissions (in time) to be performed in one slot or sub-slot or one or more overlapping PUCCHs and PUSCHs (in time) to be transmitted in one slot or sub-slot and when at least one of the overlapping PUCCHs includes HARQ-ACK information for the SPS PDSCH, the BS may limitedly apply Implementation B1 only when a PUCCH resource used when assuming that configured PUCCH transmission and UCI associated therewith are multiplexed is unavailable. For example, when a PUCCH selected in consideration of the multiplexed UCI is an available PUCCH, SPS HARQ-ACK may be received on the PUCCH selected in consideration of the multiplexed UCI, and only when the PUCCH selected in consideration of the multiplexed UCI is an unavailable PUCCH, another available PUCCH may be used for reception of SPS HARQ-ACK. In other words, in consideration of not only a PUCCH used for a HARQ-ACK response to the SPS PDSCH but also another configured PUCCH/PUSCH transmission (e.g., semi-persistent/periodic CSI report), Implementation B1 may be applied only when HARQ-ACK reception for the SPS PDSCH is not possible on a corresponding PUCCH resource. For example, even if a PUCCH to carry SPS HARQ-ACK for SPS PDSCH transmission before a multiplexing process is unavailable by the TDD UL-DL configuration and/or a processing time line condition, when a multiplexing PUCCH or a multiplexing PUSCH determined (for UCI/data multiplexing) is available from the viewpoint of the TDD UL-DL configuration and/or the processing time line condition due to overlapping of the PUCCH to carry SPS HARQ-ACK with another PUCCH or PUSCH in time, Implementation B1 may not be applied.

In some implementations, when UCI to be received on PUCCH A, which is an unavailable PUCCH, is received on PUCCH B, which is adjacent another PUCCH, according to Implementation B1, the UCI, which is moved from PUCCH A to PUCCH B and received on PUCCH B, may be limited to HARQ-ACK among UCI which has been scheduled to be received on PUCCH A. For example, when not only SPS HARQ-ACK but also an SR and a CSI report have been scheduled to be received on PUCCH A, only SPS HARQ-ACK, except for the SR and CSI report, may be received on PUCCH B. This serves to reduce UCI overhead by excluding the SR and the CSI since it is difficult to trust the SR and the CSI report and perform channel adaptation when there is a delay in the SR and CSI information.

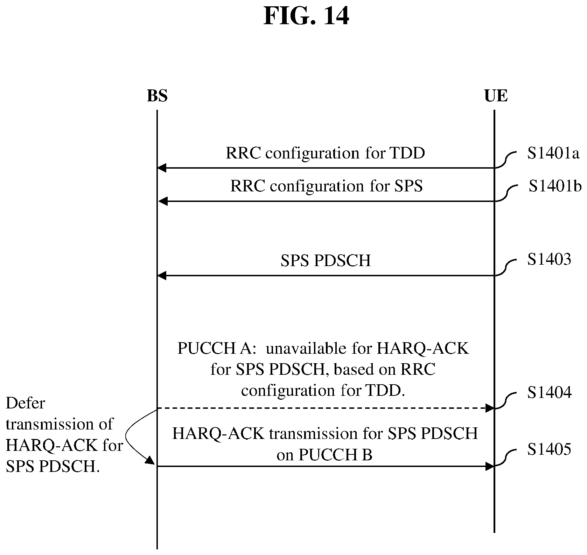

FIG. 14 illustrates a signal transmission/reception flow between a UE and a BS according to some implementations of the present disclosure.

The UE receives an RRC configuration for TDD and an RRC configuration for SPS from the BS (S1401a and S1401b). The UE and the BS may determine an unavailable PUCCH resource with respect to an SPS PDSCH based on a TDD configuration. The BS may transmit the SPS PDSCH to the UE based on the RRC configuration for SPS, and the UE may receive the SPS PDSCH based on the RRC configuration for SPS (S1403). When a PUCCH resource for HARQ-ACK transmission for the SPS PDSCH is unavailable based on the RRC configuration for TDD (S1404), the UE may defer HARQ-ACK transmission for the SPS PDSCH so that HARQ-ACK transmission may be performed on another available PUCCH resource determined according to some implementations of the present disclosure (S1405). The BS may determine a PUCCH resource on which HARQ-ACK for the SPS PDSCH transmitted to the UE is to be transmitted according to some implementations of the present disclosure and receive HARQ-ACK for the SPS PDSCH on the PUCCH resource (S1405).

According to some implementations of the present disclosure, the BS need not be restricted to the fact that the SPS configuration and the TDD configuration should be provided to the UE so that the PUCCH resource for HARQ-ACK for the SPS PDSCH may be valid even when the TDD configuration is considered. In addition, the UE may provide a HARQ-ACK response to the SPS PDSCH to the BS according to some implementations of the present disclosure even when the PUCCH resource for a configured/received SPS PDSCH is unavailable by the TDD configuration.

Implementations of the present disclosure may be separately applied or at least one thereof may be combined and applied.

The UE may perform operations according to some implementations of the present disclosure in association with transmission of HARQ-ACK information. The UE may include at least one transceiver; at least one processor; and at least one computer memory operably connectable to the at least one processor and storing instructions that, when executed, cause the at least one processor to perform operations according to some implementations of the present disclosure. A processing apparatus for the UE may include at least one processor; and at least one computer memory operably connectable to the at least one processor and storing instructions that, when executed, cause the at least one processor to perform operations according to some implementations of the present disclosure. A computer readable storage medium may store at least one computer program including instructions that, when executed by at least one processor, cause the at least one processor to perform operations according to some implementations of the present disclosure. The operations comprise: receiving a TDD UL-DL configuration and an SPS configuration; performing SPS PDSCH reception based on the SPS configuration; and transmitting HARQ-ACK for the SPS PDSCH reception. Transmitting the HARQ-ACK for the SPS PDSCH reception may comprise, based on a first PUCCH resource for the HARQ-ACK for the SPS PDSCH reception not satisfying conditions, transmitting the HARQ-ACK for the SPS PDSCH reception on a second PUCCH resource satisfying the conditions. The conditions may comprise: i) symbols of a corresponding PUCCH resource not including a symbol indicated as DL by the TDD UL-DL configuration, and ii) a time from a last symbol of the SPS PDSCH reception to a start symbol of the corresponding PUCCH resource being equal to or greater than a predetermined minimum time. In some implementations of the present disclosure, the second PUCCH resource may be an earliest next available PUCCH resource among PUCCH resources related to the SPS configuration. In some implementations of the present disclosure, the second PUCCH resource may be an earliest available PUCCH resource among PUCCH resources related to SPS configurations for which corresponding HARQ-ACK information is transmitted on the first PUCCH resource. In some implementations of the present disclosure, the second PUCCH resource may be an earliest next available PUCCH resource among PUCCH resources related to a plurality of SRS configurations provided to the UE. In some implementations of the present disclosure, the second PUCCH resource may be an earliest next available PUCCH resource among PUCCH resources related to a plurality of SRS configurations provided to the UE. In some implementations of the present disclosure, transmitting the HARQ-ACK for the SPS PDSCH reception may comprise, based on an SR or a CSI report to be transmitted on the first PUCCH resource, dropping transmission of the SR or the CSI report, and transmitting the HARQ-ACK for the SPS PDSCH reception on the second PUCCH resource without the SR or the CSI report.

The BS may perform operations according to some implementations of the present disclosure in association with reception of HARQ-ACK information. The BS may include at least one transceiver; at least one processor; and at least one computer memory operably connectable to the at least one processor and storing instructions that, when executed, cause the at least one processor to perform operations according to some implementations of the present disclosure. A processing apparatus for the BS may include at least one processor; and at least one computer memory operably connectable to the at least one processor and storing instructions that, when executed, cause the at least one processor to perform operations according to some implementations of the present disclosure. A computer readable storage medium may store at least one computer program including instructions that, when executed by at least one processor, cause the at least one processor to perform operations according to some implementations of the present disclosure. The operations comprise: receiving a TDD UL-DL configuration and an SPS configuration; performing SPS PDSCH transmission based on the SPS configuration; and receiving HARQ-ACK for the SPS PDSCH transmission. Receiving the HARQ-ACK for the SPS PDSCH transmission may comprise, based on a first PUCCH resource for the HARQ-ACK for the SPS PDSCH transmission not satisfying conditions, receiving the HARQ-ACK for the SPS PDSCH transmission on a second PUCCH resource satisfying the conditions. The conditions may comprises: i) symbols of a corresponding PUCCH resource not including a symbol indicated as DL by the TDD UL-DL configuration, and ii) a time from a last symbol of the SPS PDSCH transmission to a start symbol of the corresponding PUCCH resource being equal to or greater than a predetermined minimum time. In some implementations of the present disclosure, the second PUCCH resource may be an earliest next available PUCCH resource among PUCCH resources related to the SPS configuration. In some implementations of the present disclosure, the second PUCCH resource may be an earliest available PUCCH resource among PUCCH resources related to SPS configurations for which corresponding HARQ-ACK information is transmitted on the first PUCCH resource. In some implementations of the present disclosure, the second PUCCH resource may be an earliest next available PUCCH resource among PUCCH resources related to a plurality of SRS configurations provided to the UE. In some implementations of the present disclosure, the second PUCCH resource may be an earliest next available PUCCH resource among PUCCH resources related to a plurality of SRS configurations provided to the UE. In some implementations of the present disclosure, receiving the HARQ-ACK for the SPS PDSCH transmission may comprises, based on an SR or a CSI report to be received on the first PUCCH resource, dropping reception of the SR or the CSI report, and receiving the HARQ-ACK for the SPS PDSCH transmission on the second PUCCH resource without the SR or the CSI report.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the appended claims.

### Industrial Applicability

The implementations of the present disclosure may be used in a BS, a UE, or other equipment in a wireless communication system.

## Claims

1. A method of transmitting hybrid automatic repeat request-acknowledgement, HARQ-ACK by a user equipment, UE, in a wireless communication system, the method comprising:
receiving (S1201) a time division duplex, TDD, uplink-downlink, UL-DL, configuration and a semi-persistent scheduling, SPS, configuration;
performing (S1203) SPS physical downlink shared channel, PDSCH, reception based on the SPS configuration;
determining, in a first slot, a first physical uplink control channel, PUCCH, resource for a transmission of HARQ-ACK for the SPS PDSCH reception; and
transmitting (S1205) the HARQ-ACK for the SPS PDSCH reception,
wherein determining, in the first slot, the first PUCCH resource for the transmission of the HARQ-ACK for the SPS PDSCH reception comprises:
determining, in the first slot, the first PUCCH resource for multiplexing the HARQ-ACK for the SPS PDSCH reception with first uplink control information, UCI, to be transmitted in the first slot,
wherein transmitting the HARQ-ACK for the SPS PDSCH reception comprises, based on the first PUCCH resource satisfying conditions in the first slot, transmitting the HARQ-ACK for the SPS PDSCH reception on a second PUCCH resource, and
wherein the conditions comprise:
there being no PUCCH transmission for HARQ-ACK scheduled by downlink control information, DCI, to be performed in the first slot, and
symbols of the first PUCCH resource overlapping with a symbol indicated as DL by the TDD UL-DL configuration.

2. The method of claim 1, wherein the second PUCCH resource is an earliest next available PUCCH resource among PUCCH resources related to the SPS configuration.

3. The method of claim 1, wherein the second PUCCH resource is an earliest available PUCCH resource among PUCCH resources related to SPS configurations for which corresponding HARQ-ACK information is transmitted on the first PUCCH resource.

4. The method of claim 1, wherein the second PUCCH resource is an earliest next available PUCCH resource among PUCCH resources related to a plurality of SRS configurations provided to the UE.

5. The method of any one of claims 1 to 4, wherein the first PUCCH resource is provided by a parameter n1PUCCH-AN in the SPS configuration or by a parameter SPS-PUCCH-AN-List.

6. The method of any one of claims 1 to 5, wherein, based on the first PUCCH resource satisfying the conditions, transmitting the HARQ-ACK for the SPS PDSCH reception on the second PUCCH resource comprises:
transmitting the HARQ-ACK for the SPS PDSCH reception on the second PUCCH resource without the first UCI, and
wherein the first UCI is a scheduling request or channel state information report.

7. A user equipment, UE, (100, 200) for transmitting hybrid automatic repeat request-acknowledgement, HARQ-ACK, for a wireless communication system, the UE (100, 200) comprising:
at least one transceiver (106, 206);
at least one processor (102, 202); and
at least one computer memory (104, 204) operably connected to the at least one processor (102, 202) and storing instructions that, when executed, cause the at least one processor (102, 202) to perform operations according to any one of claims 1 to 6.

8. A computer readable storage medium storing at least one computer program including instructions that, when executed by at least one processor, cause the at least one processor to perform operations for a user equipment, UE, (100, 200) according to any one of claims 1 to 6.

9. A method of receiving hybrid automatic repeat request-acknowledgement, HARQ-ACK, by a base station, BS, from a user equipment, UE, in a wireless communication system, the method comprising:
transmitting (S1301) a time division duplex, TDD, uplink-downlink, UL-DL, configuration and a semi-persistent scheduling, SPS, configuration;
performing (S1303) SPS physical downlink shared channel, PDSCH, transmission based on the SPS configuration;
determining, in a first slot, a first physical uplink control channel, PUCCH, resource for a reception of HARQ-ACK for the SPS PDSCH reception; and
receiving (S1305) the HARQ-ACK for the SPS PDSCH transmission,
wherein determining, in the first slot, the first PUCCH resource for the reception of the HARQ-ACK for the SPS PDSCH reception comprises:
determining, in the first slot, the first PUCCH resource for multiplexing the HARQ-ACK for the SPS PDSCH reception with first uplink control information, UCI, to be received in the first slot,
wherein receiving the HARQ-ACK for the SPS PDSCH transmission comprises, based on the first PUCCH resource satisfying conditions in the first slot, receiving the HARQ-ACK for the SPS PDSCH transmission on a second PUCCH resource, and
wherein the conditions comprise:
there being no PUCCH transmission for HARQ-ACK scheduled by downlink control information, DCI, to be performed in the first slot, and
symbols of the first PUCCH resource overlapping with a symbol indicated as DL by the TDD UL-DL configuration.

10. The method of claim 9, wherein the second PUCCH resource is an earliest next available PUCCH resource among PUCCH resources related to the SPS configuration.

11. The method of claim 9, wherein the second PUCCH resource is an earliest available PUCCH resource among PUCCH resources related to SPS configurations for which corresponding HARQ-ACK information is received on the first PUCCH resource.

12. The method of claim 9, wherein the second PUCCH resource is an earliest next available PUCCH resource among PUCCH resources related to a plurality of SRS configurations provided to the UE.

13. The method of any one of claims 9 to 12, wherein the first PUCCH resource is provided by a parameter n1PUCCH-AN in the SPS configuration or by a parameter SPS-PUCCH-AN-List.

14. The method of any one of claims 9 to 13, wherein, based on the first PUCCH resource satisfying the conditions, receiving the HARQ-ACK for the SPS PDSCH reception on the second PUCCH resource comprises:
receiving the HARQ-ACK for the SPS PDSCH reception on the second PUCCH resource without the first UCI, and
wherein the first UCI is a scheduling request or channel state information report.

15. A base station, BS, (100, 200) for receiving hybrid automatic repeat request-acknowledgement, HARQ-ACK, from a user equipment, UE, for a wireless communication system, the BS (100, 200) comprising:
at least one transceiver (106, 206);
at least one processor (102, 202); and
at least one computer memory (104, 204) operably connected to the at least one processor (102, 202) and storing instructions that, when executed, cause the at least one processor (102, 202) to perform operations according to any one of claims 9 to 14.

## Patentansprüche

1. Verfahren zum Übertragen einer hybriden automatischen Wiederholungsanfrage-Bestätigung, HARQ-ACK, durch eine Benutzerausrüstung, UE, in einem drahtlosen Kommunikationssystem, wobei das Verfahren Folgendes umfasst:
Empfangen (S1201) einer Zeitduplex, TDD,-Uplink-Downlink, UL-DL,-Konfiguration und einer Semi-Persistent Scheduling, SPS,-Konfiguration;
Durchführen (S1203) eines Empfangs eines physischen gemeinsam genutzten SPS-Downlink-Kanals, PDSCH, basierend auf der SPS-Konfiguration;
Bestimmen einer ersten physischen Uplink-Steuerkanal, PUCCH,-Ressource für die Übertragung einer HARQ-ACK für den SPS-PDSCH-Empfang in einem ersten Slot; und
Übertragen (S1205) der HARQ-ACK für den SPS-PDSCH-Empfang,
wobei das Bestimmen der ersten PUCCH-Ressource für die Übertragung der HARQ-ACK für den Empfang des SPS-PDSCH in dem ersten Slot Folgendes umfasst:
Bestimmen der ersten PUCCH-Ressource in dem ersten Slot zur Multiplexierung der HARQ-ACK für den SPS-PDSCH-Empfang mit ersten Uplink-Steuerinformationen, UCI, die in dem ersten Slot übertragen werden sollen,
wobei das Übertragen der HARQ-ACK für den SPS-PDSCH-Empfang basierend auf der ersten PUCCH-Ressource, die die Bedingungen in dem ersten Slot erfüllt, das Übertragen der HARQ-ACK für den SPS-PDSCH-Empfang auf einer zweiten PUCCH-Ressource umfasst,
wobei die Bedingungen Folgendes umfassen:
es gibt keine PUCCH-Übertragung für HARQ-ACK, die geplant durch Downlink-Steuerinformationen, DCI, in dem ersten Slot durchgeführt werden soll, und
die Symbole der ersten PUCCH-Ressource überschneiden sich mit einem Symbol, das durch die TDD-UL-DL-Konfiguration als DL gekennzeichnet ist.

2. Verfahren nach Anspruch 1, wobei die zweite PUCCH-Ressource die früheste verfügbare PUCCH-Ressource unter den PUCCH-Ressourcen ist, die sich auf die SPS-Konfiguration beziehen.

3. Verfahren nach Anspruch 1, wobei die zweite PUCCH-Ressource die frühest verfügbare PUCCH-Ressource unter den PUCCH-Ressourcen ist, die sich auf SPS-Konfigurationen beziehen, für die die entsprechenden HARQ-ACK-Informationen auf die erste PUCCH-Ressource übertragen werden.

4. Verfahren nach Anspruch 1, wobei die zweite PUCCH-Ressource die früheste verfügbare PUCCH-Ressource unter den PUCCH-Ressourcen ist, die sich auf eine Vielzahl von SRS-Konfigurationen beziehen, die der UE bereitgestellt werden.

5. Verfahren nach einem der Ansprüche 1 bis 4, wobei die erste PUCCH-Ressource durch einen Parameter n1PUCCH-AN in der SPS-Konfiguration oder durch einen Parameter SPS-PUCCH-AN-List bereitgestellt wird.

6. Verfahren nach einem der Ansprüche 1 bis 5, wobei basierend auf der ersten PUCCH-Ressource, die die Bedingungen erfüllt, das Übertragen der HARQ-ACK für den SPS-PDSCH-Empfang auf der zweiten PUCCH-Ressource Folgendes umfasst:
Übertragen der HARQ-ACK für den SPS-PDSCH-Empfang auf der zweiten PUCCH-Ressource ohne die ersten UCI, und
wobei die ersten UCI ein Zeitplananfrage- oder Kanalzustandsinformationsbericht ist.

7. Benutzerausrüstung, UE, (100, 200) zum Übertragen der hybriden automatischen Wiederholungsanfrage-Bestätigung, HARQ-ACK, für ein drahtloses Kommunikationssystem, wobei die UE (100, 200) Folgendes umfasst:
mindestens einen Transceiver (106, 206);
mindestens einen Prozessor (102, 202); und
mindestens einen Computerspeicher (104, 204), der betriebsbereit mit dem mindestens einen Prozessor (102, 202) verbunden ist und Anweisungen speichert, die bei Ausführung den mindestens einen Prozessor (102, 202) dazu veranlassen, Operationen nach einem der Ansprüche 1 bis 6 durchzuführen.

8. Computerlesbares Speichermedium, das mindestens ein Computerprogramm speichert, das Anweisungen enthält, die, wenn sie von mindestens einem Prozessor ausgeführt werden, den mindestens einen Prozessor dazu veranlassen, Operationen für eine Benutzerausrüstung, UE, (100, 200) nach einem der Ansprüche 1 bis 6 durchzuführen.

9. Verfahren zum Empfangen einer hybriden automatischen Wiederholungsanfrage-Bestätigung, HARQ-ACK, durch eine Basisstation, BS, von einer Benutzerausrüstung, UE, in einem drahtlosen Kommunikationssystem, wobei das Verfahren Folgendes umfasst:
Übertragen (S1301) einer Zeitduplex, TDD,-Uplink-Downlink, UL-DL,-Konfiguration und einer Semi-Persistent Scheduling, SPS,-Konfiguration;
Durchführen (S 1303) einer Übertragung eines physischen gemeinsam genutzten SPS-Downlink-Kanals, PDSCH, basierend auf der SPS-Konfiguration;
Bestimmen einer ersten physischen Uplink-Steuerkanal, PUCCH,-Ressource für einen Empfang einer HARQ-ACK für den SPS-PDSCH-Empfang in einem ersten Slot; und
Empfangen (S1305) der HARQ-ACK für die SPS-PDSCH-Übertragung,
wobei das Bestimmen der ersten PUCCH-Ressource für den Empfang der HARQ-ACK für den Empfang des SPS-PDSCH in dem ersten Slot Folgendes umfasst:
Bestimmen der ersten PUCCH-Ressource im ersten Slot zur Multiplexierung der HARQ-ACK für den SPS-PDSCH-Empfang mit ersten Uplink-Steuerinformationen, UCI, die in dem ersten Slot empfangen werden sollen,
wobei das Empfangen der HARQ-ACK für die SPS-PDSCH-Übertragung basierend auf der ersten PUCCH-Ressource, die die Bedingungen in dem ersten Slot erfüllt, das Empfangen der HARQ-ACK für die SPS-PDSCH-Übertragung auf einer zweiten PUCCH-Ressource umfasst, und
wobei die Bedingungen Folgendes umfassen:
es gibt keine PUCCH-Übertragung für HARQ-ACK, die geplant durch Downlink-Steuerinformationen, DCI, in dem ersten Slot durchgeführt werden soll, und
die Symbole der ersten PUCCH-Ressource überschneiden sich mit einem Symbol, das durch die TDD-UL-DL-Konfiguration als DL gekennzeichnet ist.

10. Verfahren nach Anspruch 9, wobei die zweite PUCCH-Ressource die früheste verfügbare PUCCH-Ressource unter den PUCCH-Ressourcen ist, die sich auf die SPS-Konfiguration beziehen.

11. Verfahren nach Anspruch 9, wobei die zweite PUCCH-Ressource die frühest verfügbare PUCCH-Ressource unter den PUCCH-Ressourcen ist, die sich auf SPS-Konfigurationen beziehen, für die die entsprechenden HARQ-ACK-Informationen auf der ersten PUCCH-Ressource empfangen werden.

12. Verfahren nach Anspruch 9, wobei die zweite PUCCH-Ressource die früheste verfügbare PUCCH-Ressource unter den PUCCH-Ressourcen ist, die sich auf eine Vielzahl von SRS-Konfigurationen beziehen, die der UE bereitgestellt werden.

13. Verfahren nach einem der Ansprüche 9 bis 12, wobei die erste PUCCH-Ressource durch einen Parameter n1PUCCH-AN in der SPS-Konfiguration oder durch einen Parameter SPS-PUCCH-AN-List bereitgestellt wird.

14. Verfahren nach einem der Ansprüche 9 bis 13, wobei basierend auf der ersten PUCCH-Ressource, die die Bedingungen erfüllt, das Empfangen der HARQ-ACK für den SPS-PDSCH-Empfang auf der zweiten PUCCH-Ressource Folgendes umfasst:
Empfangen der HARQ-ACK für den SPS-PDSCH-Empfang auf der zweiten PUCCH-Ressource ohne die ersten UCI, und
wobei die ersten UCI ein Zeitplananfrage- oder Kanalzustandsinformationsbericht ist.

15. Basisstation, BS, (100, 200) zum Empfangen der hybriden automatischen Wiederholungsanfrage-Bestätigung, HARQ-ACK, von einer Benutzerausrüstung, UE, für ein drahtloses Kommunikationssystem, wobei die BS (100, 200) Folgendes umfasst:
mindestens einen Transceiver (106, 206);
mindestens einen Prozessor (102, 202); und
mindestens einen Computerspeicher (104, 204), der betriebsbereit mit dem mindestens einen Prozessor (102, 202) verbunden ist und Anweisungen speichert, die bei Ausführung den mindestens einen Prozessor (102, 202) dazu veranlassen, Operationen nach einem der Ansprüche 9 bis 14 durchzuführen.

## Revendications

1. Procédé d'émission d'un accusé de réception de requête de répétition automatique hybride, HARQ-ACK, par un équipement utilisateur, UE, dans un système de communication sans fil, le procédé comprenant :
la réception (S1201) d'une configuration de liaison montante et descendante, UL-DL, en duplex par répartition dans le temps, TDD, et d'une configuration de planification semi-persistante, SPS ;
la réalisation (S1203) d'une réception de canal physique partagé de liaison descendante, PDSCH, SPS sur la base de la configuration SPS ;
la détermination, dans un premier créneau, d'une première ressource de canal physique de contrôle de liaison montante, PUCCH, pour une émission de HARQ-ACK pour la réception PDSCH SPS ; et
l'émission (S1205) du HARQ-ACK pour la réception PDSCH SPS,
dans lequel la détermination, dans le premier créneau, de la première ressource PUCCH pour l'émission du HARQ-ACK pour la réception PSDCH SPS comprend :
la détermination, dans le premier créneau, de la première ressource PUCCH pour le multiplexage du HARQ-ACK pour la réception PDSCH SPS avec des premières informations de contrôle de liaison montante, UCI, à émettre dans le premier créneau,
dans lequel l'émission du HARQ-ACK pour la réception PDSCH SPS comprend, sur la base de la première ressource PUCCH satisfaisant à des conditions dans le premier créneau, l'émission du HARQ-ACK pour la réception PDSCH SPS sur une seconde ressource PUCCH, et
dans lequel les conditions comprennent :
l'absence d'émission PUCCH pour HARQ-ACK planifiée par des informations de contrôle de liaison descendante, DCI, à réaliser dans le premier créneau, et
des symboles de la première ressource PUCCH se chevauchant avec un symbole indiqué comme DL par la configuration UL-DL TDD.

2. Procédé selon la revendication 1, dans lequel la seconde ressource PUCCH est une toute première ressource PUCCH disponible suivante parmi des ressources PUCCH associées à la configuration SPS.

3. Procédé selon la revendication 1, dans lequel la seconde ressource PUCCH est une toute première ressource PUCCH disponible parmi des ressources PUCCH liées à des configurations SPS pour lesquelles des informations HARQ-ACK correspondantes sont émises sur la première ressource PUCCH.

4. Procédé selon la revendication 1, dans lequel la seconde ressource PUCCH est une toute première ressource PUCCH disponible suivante parmi des ressources PUCCH liées à une pluralité de configurations SRS fournies à l'UE.

5. Procédé selon l'une quelconque des revendications 1 à 4, dans lequel la première ressource PUCCH est fournie par un paramètre n1PUCCH-AN dans la configuration SPS ou par un paramètre *SPS-PUCCH-AN-List.*

6. Procédé selon l'une quelconque des revendications 1 à 5, dans lequel, sur la base de la première ressource PUCCH satisfaisant aux conditions, l'émission du HARQ-ACK pour la réception PSDCH SPS sur la seconde ressource PUCCH comprend :
l'émission de l'HARQ-ACK pour la réception PDSCH SPS sur la seconde ressource PUCCH sans les premières UCI, et
dans lequel les premières UCI sont une requête de planification ou un rapport d'informations d'état de canal.

7. Équipement utilisateur, UE, (100, 200) pour émettre un accusé de réception de requête de répétition automatique hybride, HARQ-ACK, pour un système de communication sans fil, l'UE (100, 200) comprenant :
au moins un émetteur-récepteur (106, 206) ;
au moins un processeur (102, 202) ; et
au moins une mémoire d'ordinateur (104, 204) pouvant être connectée fonctionnellement à l'au moins un processeur (102, 202) et stockant des instructions qui, lorsqu'elles sont exécutées, amènent l'au moins un processeur (102, 202) à réaliser des opérations selon l'une quelconque des revendications 1 à 6.

8. Support de stockage lisible par ordinateur stockant au moins un programme informatique comprenant des instructions qui, lorsqu'elles sont exécutées par au moins un processeur, amènent l'au moins un processeur à réaliser des opérations pour un équipement utilisateur, UE (100, 200) selon l'une quelconque des revendications 1 à 6.

9. Procédé de réception d'un accusé de réception de requête de répétition automatique hybride, HARQ-ACK, par une station de base, BS, à partir d'un équipement utilisateur, UE, dans un système de communication sans fil, le procédé comprenant :
l'émission (S1301) d'une configuration de liaison montante et descendante, UL-DL, en duplex par répartition dans le temps, TDD, et d'une configuration de planification semi-persistante, SPS ;
la réalisation (S1303) d'une émission de canal physique partagé de liaison descendante, PDSCH, SPS sur la base de la configuration SPS ;
la détermination, dans un premier créneau, d'une première ressource de canal physique de contrôle de liaison montante, PUCCH, pour une réception de HARQ-ACK pour la réception PDSCH SPS ; et
la réception (S1305) du HARQ-ACK pour l'émission PDSCH SPS,
dans lequel la détermination, dans le premier créneau, de la première ressource PUCCH pour la réception du HARQ-ACK pour la réception PDSCH SPS comprend :
la détermination, dans le premier créneau, de la première ressource PUCCH pour le multiplexage du HARQ-ACK pour la réception PDSCH SPS avec des premières informations de contrôle de liaison montante, UCI, à recevoir dans le premier créneau, dans lequel la réception du HARQ-ACK pour l'émission PSDCH SPS comprend, sur la base de la première ressource PUCCH satisfaisant à des conditions dans le premier créneau, la réception du HARQ-ACK pour l'émission PSDCH SPS sur une seconde ressource PUCCH, et
dans lequel les conditions comprennent :
l'absence d'émission PUCCH pour HARQ-ACK planifiée par des informations de contrôle de liaison descendante, DCI, à réaliser dans le premier créneau, et
des symboles de la première ressource PUCCH se chevauchant avec un symbole indiqué comme DL par la configuration UL-DL TDD.

10. Procédé selon la revendication 9, dans lequel la seconde ressource PUCCH est une toute première ressource PUCCH disponible suivante parmi des ressources PUCCH associées à la configuration SPS.

11. Procédé selon la revendication 9, dans lequel la seconde ressource PUCCH est une toute première ressource PUCCH disponible parmi des ressources PUCCH liées à des configurations SPS pour lesquelles des informations HARQ-ACK correspondantes sont reçues sur la première ressource PUCCH.

12. Procédé selon la revendication 9, dans lequel la seconde ressource PUCCH est une toute première ressource PUCCH disponible suivante parmi des ressources PUCCH liées à une pluralité de configurations SRS fournies à l'UE.

13. Procédé selon l'une quelconque des revendications 9 à 12, dans lequel la première ressource PUCCH est fournie par un paramètre n1PUCCH-AN dans la configuration SPS ou par un paramètre SPS-PUCCH-AN-List.

14. Procédé selon l'une quelconque des revendications 9 à 13, dans lequel, sur la base de la première ressource PUCCH satisfaisant aux conditions, la réception du HARQ-ACK pour la réception PSDCH SPS sur la seconde ressource PUCCH comprend :
la réception du HARQ-ACK pour la réception PDSCH SPS sur la seconde ressource PUCCH sans les premières UCI, et
dans lequel les premières UCI sont une requête de planification ou un rapport d'informations d'état de canal.

15. Station de base, BS, (100, 200) pour recevoir un accusé de réception de requête de répétition automatique hybride, HARQ-ACK, à partir d'un équipement utilisateur, UE, pour un système de communication sans fil, la BS (100, 200) comprenant :
au moins un émetteur-récepteur (106, 206) ;
au moins un processeur (102, 202) ; et
au moins une mémoire d'ordinateur (104, 204) pouvant être connectée fonctionnellement à l'au moins un processeur (102, 202) et stockant des instructions qui, lorsqu'elles sont exécutées, amènent l'au moins un processeur (102, 202) à réaliser des opérations selon l'une quelconque des revendications 9 à 14.
